# EUROPEAN PATENT APPLICATION

(11) **EP 4 712 386 A1**
(43) Date of publication of application: **18.03.2026**
(21) Application number: 23936002.7
(22) Date of filing: 08.05.2023
(51) Int. Cl.: H04L 5/00

(54) **METHOD AND APPARATUS FOR DETERMINING ACTIVE BEAM, COMMUNICATION DEVICE, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2023/092848
(87) International publication number: WO 2024/229674

(57) **Abstract**

Provided in the embodiments of the present disclosure are a method and apparatus for determining an active beam, a communication device, and a storage medium. The method comprises: receiving first information sent by an access network device, the first information being configured to indicate the active beam; and according to the first information and second information, determining an active beam used by a physical downlink control channel (PDCCH) transmitted in a downlink (DL) time unit and/or in a subband full duplex (SBFD) time unit, wherein the second information comprises beam information of candidate beams; and the active beams used when transmitting the PDCCH in the DL time unit and in the SBFD time unit are different. As such, the active beams can be configured to perform the transmission of the PDCCH with respect to the DL time unit and the SBFD time unit, respectively, so that the transmission of the PDCCH is more flexible and reliable.

## Description

### TECHNICAL FIELD

The present disclosure relates to, but is not limited to, the field of wireless communication technologies, and in particular to a method and apparatus for determining an active beam, a communication device, and a storage medium.

### BACKGROUND

In wireless communication technologies, there are Downlink (DL) symbols, Uplink (UL) symbols, Flexible (F) symbols, and Subband Full Duplex (SBFD) symbols. When Physical Downlink Control Channel (PDCCH) transmission is performed on the DL symbols and the SBFD symbols, active beams are required.

### SUMMARY

Embodiments of the present disclosure disclose a method and apparatus for determining an active beam, a communication device, and a storage medium.

According to a first aspect of embodiments of the present disclosure, there is provided a method for determining an active beam, wherein the method is performed by a terminal and includes:
receiving first information sent from an access network device, wherein the first information is configured to indicate an active beam; and
determining, based on the first information and second information, an active beam used by a Physical Downlink Control Channel (PDCCH) transmitted in a Downlink (DL) time unit and/or in a Subband Full Duplex (SBFD) time unit, wherein the second information includes beam information of a candidate beam, and an active beam used to transmit the PDCCH in the DL time unit and an active beam used to transmit the PDCCH in the SBFD time unit are different.

According to a second aspect of embodiments of the present disclosure, there is provided a method for determining an active beam, wherein the method is performed by an access network device and includes:
sending first information to a terminal; and
wherein the first information indicates to the terminal an active beam used by a Physical Downlink Control Channel (PDCCH) transmitted in a Downlink (DL) time unit and/or in a Subband Full Duplex (SBFD) time unit, and an active beam used to transmit the PDCCH in the DL time unit and an active beam used to transmit the PDCCH in the SBFD time unit are different.

According to a third aspect of embodiments of the present disclosure, there is provided an apparatus for determining an active beam, wherein the apparatus includes:
a receiving module, configured to receive first information sent from an access network device, wherein the first information is configured to indicate an active beam; and
a determination module, configured to determine, based on the first information and second information, an active beam used by a Physical Downlink Control Channel (PDCCH) transmitted in a Downlink (DL) time unit and/or in a Subband Full Duplex (SBFD) time unit, wherein the second information includes beam information of a candidate beam, and an active beam used to transmit the PDCCH in the DL time unit and an active beam used to transmit the PDCCH in the SBFD time unit are different.

According to a fourth aspect of embodiments of the present disclosure, there is provided an apparatus for determining an active beam, wherein the apparatus includes:
a sending module, configured to send first information to a terminal; and
wherein the first information indicates to the terminal an active beam used by a Physical Downlink Control Channel (PDCCH) transmitted in a Downlink (DL) time unit and/or in a Subband Full Duplex (SBFD) time unit, and an active beam used to transmit the PDCCH in the DL time unit and an active beam used to transmit the PDCCH in the SBFD time unit are different.

According to a fifth aspect of embodiments of the present disclosure, there is provided a communication device, including:
a processor; and
a memory configured to store executable instructions of the processor;
wherein the processor is configured to implement the method in any embodiment of the present disclosure when running the executable instructions.

According to a sixth aspect of embodiments of the present disclosure, there is provided a computer storage medium having a computer executable program stored thereon, which, when executed by a processor, implements the method in any embodiment of the present disclosure.

In the embodiments of the present disclosure, the first information sent from the access network device is received, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, the second information includes the beam information of the candidate beam, and the active beam used to transmit the PDCCH in the DL time unit and the active beam used to transmit the PDCCH in the SBFD time unit are different. Here, since the first information indicates the active beam, after receiving the first information, the terminal can determine, based on the indicated active beam and the beam information of the candidate beam included in the second information, the active beam used by the Physical Downlink Control Channel (PDCCH) transmitted in the Downlink (DL) time unit and/or in the Subband Full Duplex (SBFD) time unit. Since the active beam used to transmit the PDCCH in the DL time unit and the active beam used to transmit the PDCCH in the SBFD time unit are different, active beams can be configured for the DL time unit and the SBFD time unit, respectively, to perform the PDCCH transmission, making the PDCCH transmission more flexible and reliable.

### BRIEF DESCRIPTION OF THE DRAWINGS

FIG. 1 shows a schematic structural diagram of a wireless communication system according to an example embodiment.
FIG. 2 shows a schematic diagram of different types of slots according to an example embodiment.
FIG. 3 shows a schematic diagram of an antenna configuration according to an example embodiment.
FIG. 4 shows a schematic diagram of UE-to-UE cross link interference according to an example embodiment.
FIG. 5a shows a schematic flowchart of a method for determining an active beam according to an example embodiment.
FIG. 5b shows a schematic diagram of a MAC CE according to an example embodiment.
FIG. 5c shows a schematic diagram of a MAC CE effectiveness slot according to an example embodiment.
FIG. 5d shows a schematic diagram of a TCI state indication according to an example embodiment.
FIG. 5e shows a schematic diagram of a TCI state indication according to an example embodiment.
FIG. 5f shows a schematic diagram of a TCI state indication according to an example embodiment.
FIG. 5g shows a schematic diagram of a TCI state indication according to an example embodiment.
FIG. 6 shows a schematic flowchart of a method for determining an active beam according to an example embodiment.
FIG. 7 shows a schematic flowchart of a method for determining an active beam according to an example embodiment.
FIG. 8 shows a schematic flowchart of a method for determining an active beam according to an example embodiment.
FIG. 9 shows a schematic flowchart of a method for determining an active beam according to an example embodiment.
FIG. 10 shows a schematic flowchart of a method for determining an active beam according to an example embodiment.
FIG. 11 shows a schematic flowchart of a method for determining an active beam according to an example embodiment.
FIG. 12 shows a schematic diagram of an apparatus for determining an active beam according to an example embodiment.
FIG. 13 shows a schematic diagram of an apparatus for determining an active beam according to an example embodiment.
FIG. 14 shows a schematic structural diagram of a terminal according to an example embodiment.
FIG. 15 shows a block diagram of a base station according to an example embodiment.

### DETAILED DESCRIPTION

Reference is made in detail to embodiments, examples of which are illustrated in the accompanying drawings. The following description refers to the accompanying drawings in which the same numbers in different drawings represent the same or similar elements unless otherwise represented. The implementations set forth in the following description of the embodiments do not represent all implementations consistent with the present disclosure. Instead, they are merely examples of apparatuses and methods consistent with some aspects of the embodiments of the present disclosure as recited in the appended claims.

The terms used in the embodiments of the present disclosure are merely for the purpose of describing particular embodiments and are not intended to limit the embodiments of the present disclosure. As used in the present disclosure and the appended claims, the singular forms "a" and "the" are intended to include the plural forms as well, unless the context clearly indicates otherwise. It should also be understood that the term "and/or" as used herein refers to and includes any or all possible combinations of one or more of the associated listed items.

It should be understood that, although the terms first, second, third, etc. may be used in embodiments of the present disclosure to describe various information, such information should not be limited to these terms. These terms are only used to distinguish the same type of information from each other. For example, without departing from the scope of embodiments of the present disclosure, first information may also be referred to as second information, and similarly, the second information may also be referred to as the first information. Depending on the context, the word "if' as used herein can be interpreted as "upon" or "when" or "in response to determination".

For the purpose of brevity and ease of understanding, the term "greater than" or "less than" is used herein to characterize size relationships. However, those skilled in the art can understand that the term "greater than" also covers the meaning of "greater than or equal to", and "less than" also covers the meaning of "less than or equal to".

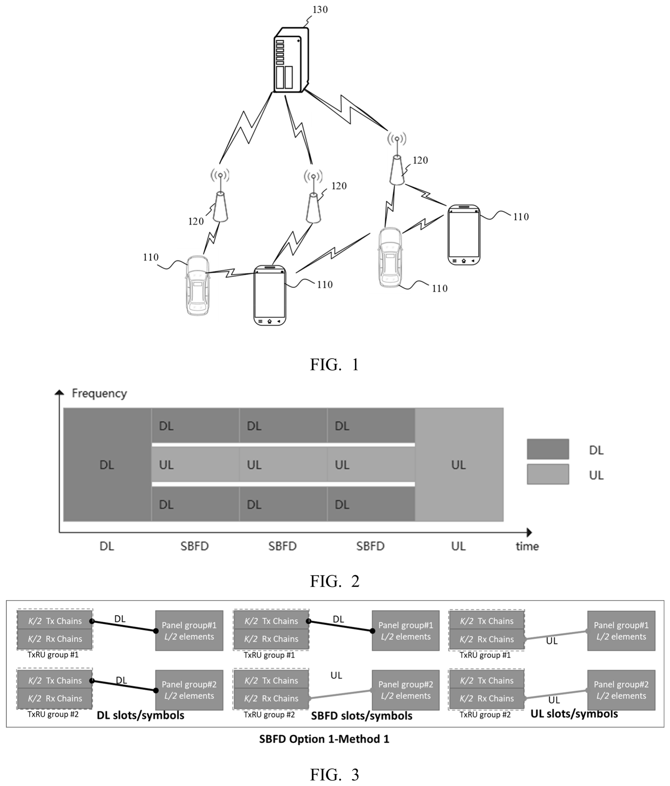

Reference is made to FIG. 1, which shows a schematic structural diagram of a wireless communication system provided by an embodiment of the present disclosure. As illustrated in FIG. 1, the wireless communication system is a communication system based on mobile communication technologies. The wireless communication system may include several User Equipments (UEs) 110 and several base stations 120. It should be noted that the User Equipment (UE) in the present disclosure can be a terminal. It can be understood that the terminal in the present disclosure can be considered as the user equipment.

The UE 110 may be a device that provides voice and/or data connectivity to a user. The UE 110 may communicate with one or more core networks via a Radio Access Network (RAN). The UE 110 may be an Internet of Things UE, such as a sensor device, a mobile phone and a computer with the Internet of Things UE, for example, may be a fixed, portable, pocket-sized, handheld, built-in computer or vehicle-mounted device. For example, the UE may be a station (STA), a subscriber unit, a subscriber station, a mobile station, a mobile, a remote station, an access point, a remote terminal, an access terminal, a user terminal, a user agent, a user device, or user equipment. Or, the UE 110 may also be a device of an unmanned aerial vehicle. Or, the UE 110 may also be a vehicle-mounted device, such as a trip computer with a wireless communication function, or a wireless user device connected to an external trip computer. Or, the UE 110 may also be a roadside device, such as a streetlight, a signal light or another roadside device with a wireless communication function.

The base station 120 can be a network-side device in a wireless communication system. The wireless communication system can be a 4th generation mobile communication (4G) system, also known as a Long Term Evolution (LTE) system. Or, the wireless communication system may also be a 5G system, also known as a New Radio (NR) system or a 5G NR system. Or, the wireless communication system may also be a next-generation system of 5G system. An access network in the 5G system can be referred to as a New Generation-Radio Access Network (NG-RAN).

The base station 120 can be an evolved NodeB (eNB) in the 4G system. Or, the base station 120 may also be a gNB with a central distributed architecture in the 5G system. When the base station 120 adopts the central distributed architecture, it usually includes a Central Unit (CU) and at least two Distributed Units (DUs). The CU is provided with a protocol stack of a Packet Data Convergence Protocol (PDCP) layer, a Radio Link Control (RLC) layer, and a Media Access Control (MAC) layer. The DU is provided with a protocol stack of a Physical (PHY) layer. A specific implementation of the base station 120 is not limited in embodiments of the present disclosure.

A wireless connection can be established between the base station 120 and the UE 110 through a radio air interface. In different implementations, the radio air interface is a radio air interface based on a 4th generation mobile communication network technology (4G) standard. Or, the radio air interface is a radio air interface based on a 5th generation mobile communication network technology (5G) standard, such as the NR. Or, the radio air interface may also be a radio air interface based on a 5G next-generation mobile communication network technology standard.

In some embodiments, an End to End (E2E) connection may also be established between UEs 110, such as a vehicle to vehicle (V2V) communication, a vehicle to infrastructure (V2I) communication and a vehicle to pedestrian (V2P) communication in a vehicle to everything (V2X) communication, and other scenarios.

Here, the above UE may also be considered to be a terminal device in the following embodiments.

In some embodiments, the above wireless communication system may further include a network management device 130.

The several base stations 120 are connected to the network management device 130, respectively. The network management device 130 can be a core network device in the wireless communication system. For example, the network management device 130 can be a Mobility Management Entity (MME) in an Evolved Packet Core (EPC) network. Or, the network management device may also be another core network device, such as a Serving Gateway (SGW), a Public Data Network Gateway (PGW), a Policy and Charging Rules Function (PCRF) unit or a Home Subscriber Server (HSS). An implementation form of the network management device 130 is not limited in embodiments of the present disclosure.

In order to facilitate the understanding of those skilled in the art, embodiments of the present disclosure enumerate multiple implementations to clearly illustrate the technical solutions of the embodiments of the present disclosure. Note that, those skilled in the art can understand that the multiple embodiments provided by the embodiments of the present disclosure can be executed separately, or can be executed together with the methods of other embodiments of the embodiments of the present disclosure, or can be executed together with some methods in other related arts separately or in combination; the embodiments of the present disclosure do not limit this.

In order to better understand embodiments of the present disclosure, the illustrative description of relevant scenarios is given below.

To improve Uplink (UL) coverage and throughput, duplex enhancement has been studied on Subband Full Duplex (SBFD).

In an embodiment, a Carrier Component (CC) on a Downlink (DL) symbol or a Flexible (F) symbol is divided into a plurality of SubBands (SBs) in a frequency domain. The plurality of SBs include one UL subband and at least one (one or two) DL subband. A base station can send a DL signal on the DL subband and receive a UL signal on the UL subband at the same time. The DL or F symbol can be configured in at least one of the following manners:
the DL or F symbol can be configured through TDD-UL-DL-ConfigCommon;
the DL or F symbol can be configured through TDD-UL-DL-ConfigDedicated;
the DL or F symbol can be configured through TDD-UL-DL-ConfigCommon and TDD-UL-DL-ConfigDedicated; or
the DL or F symbol can be indicated through Downlink Control Information Format 2-0 (DCI format 2-0).

When a symbol includes both a DL subband and a UL subband in the frequency domain, it may be called an SBFD symbol.

In an embodiment, when at least one SBFD symbol is included among a plurality of symbols included in a slot, the slot can be called a SBFD slot. Referring to FIG. 2, slot 0 is a DL slot, slots 1 to 3 are SBFD slots, and slot 4 is a UL slot.

In an embodiment, when the plurality of symbols included in a slot are all SBFD symbols, the slot may be called a SBFD slot.

In an embodiment, three schemes are provided for an antenna configuration of a base station supporting the SBFD. Referring to FIG. 3, an antenna configuration (antenna configuration 1) is as follows.

For a DL time unit, K transmit chains (Tx Chains) are configured for DL transmission. For example, transceiver unit (TxRU) group #1 and group #2 each has K/2 Tx Chains for DL transmission. One antenna chain may correspond to one or more elements within a panel group. In the figure, one panel is configured with L/2 elements.

For a SBFD time unit, K/2 transmit chains (Tx Chains) are configured for DL transmission, and K/2 receive chains (Rx Chains) are configured for UL reception.

For a UL time unit, K receive chains (Rx Chains) are configured for UL reception.

In a wireless communication system, a network device will indicate a beam it uses, and the UE will determine, based on a transmit beam of the network device, a corresponding receive beam for the UE to perform downlink reception, and/or determine, based on a receive beam of the network device, a transmit beam for the UE to perform uplink transmission.

Obviously, for the DL time unit and the SBFD time unit, the number of Tx Chains used by the network device for downlink transmission is different, so the UE's receive beams in the DL time unit and the SBFD time unit may have the following differences.

The network device has different numbers of beams in the DL and SBFD time units. Therefore, optimal beams for downlink reception for the same UE in the DL and SBFD time units are different.

The network device has the same number of beams in the DL and SBFD time units, but the network device has different beam gains on the same beam in the DL and SBFD time units. Therefore, optimal beams for downlink reception of the same UE in the DL and SBFD time units are different.

In addition, the network device will perform transmission and reception simultaneously in the SBFD time unit. When the UE receives the DL signal, it may be interfered by the UL signals sent from other UEs of the same network device or UEs of other network devices.

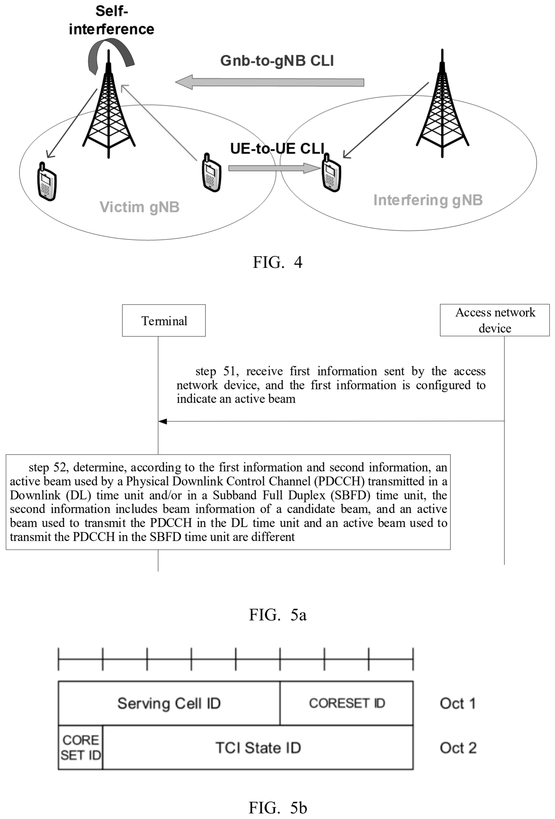

As shown in FIG. 4, the interference of the UL signal on the DL signal may be called UE-UE Cross Link Interference (UE-to-UE CLI). To mitigate strong UE-to-UE CLI, the network device can select a different beam for DL transmission in the SBFD time unit than in the DL time unit, which is equivalent to suppressing the UE-to-UE CLI through spatial isolation and is called spatial UE-to-UE suppression.

Therefore, the base station has different optimal beams in the DL time unit and the SBFD time unit, and needs to indicate different optimal receive beams to the UE in the DL time unit and the SBFD time unit.

Therefore, in transmission scenarios where different beams are required for DL time units and SBFD time units, how to determine the beam used by the Physical Downlink Control Channel (PDCCH) transmitted in the Downlink (DL) time unit and/or in the Subband Full Duplex (SBFD) time unit is a problem that needs to be considered. To address this technical problem, the following describes an embodiment that at least addresses this technical problem.

As shown in FIG. 5a, an embodiment provides a method for determining an active beam, which is performed by a terminal and includes:
in step 51, first information sent from an access network device is received, and the first information is configured to indicate an active beam; and
in step 52, an active beam used by a Physical Downlink Control Channel (PDCCH) transmitted in a Downlink (DL) time unit and/or in a Subband Full Duplex (SBFD) time unit is determined based on the first information and second information, the second information includes beam information of a candidate beam, and an active beam used to transmit the PDCCH in the DL time unit and an active beam used to transmit the PDCCH in the SBFD time unit are different.

Here, the terminal involved in the present disclosure may be, but is not limited to, a mobile phone, a wearable device, a vehicle-mounted terminal, a Road Side Unit (RSU), a smart home terminal, an industrial sensor device and/or a medical device, etc. In some embodiments, the terminal may be a Redcap terminal or a predetermined version of a New Radio (NR) terminal (e.g., an R17 NR terminal).

Here, the access network device involved in the present disclosure may be various types of base stations, for example, a base station of the third generation mobile communication (3G) network, a base station of the fourth generation mobile communication (4G) network, a base station of the fifth generation mobile communication (5G) network, or other evolved base stations.

In an embodiment, the time unit may be a symbol, a mini-slot, a slot, a subframe, or a radio frame, which is not limited here and may be a time unit of other time granularity.

In an embodiment, the first information sent from the access network device is received, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, the second information includes the beam information of the candidate beam, and the active beam used to transmit the PDCCH in the DL time unit and the active beam used to transmit the PDCCH in the SBFD time unit are different. The PDCCH is detected, based on the configured time-frequency domain position information, in a direction of the determined active beam. Here, the time-frequency domain position information may indicate the DL time unit and/or the SBFD time unit.

In an embodiment, the second information may be determined based on a predetermined protocol rule; or, the second information may be received from the access network device.

In an embodiment, the terminal may receive the time-frequency domain position information in advance from the access network device. For example, the time-frequency domain position information sent from the access network device may be received through an RRC message.

In an embodiment, the active beam, indicated by the first information, used to transmit the PDCCH in the DL time unit is different from the active beam, indicated by the first information, used to transmit the PDCCH in the SBFD time unit.

In an embodiment, the second information is determined based on the predetermined protocol rule, and the second information includes the beam information of the candidate beam. The first information sent from the access network device is received, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different.

In an embodiment, the second information sent from the access network device is received, and the second information includes the beam information of the candidate beam. The first information sent from the access network device is received, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different.

In an embodiment, the second information sent from the access network device is received through first-type signaling, and the second information includes the beam information of the candidate beam. The first information sent from the access network device is received through second-type signaling, and the first information is configured to indicate the active beam. Beam information of the active beam can be determined based on the first information and the second information. There may be a plurality of candidate beams. For example, the candidate beams include beam 1, beam 2, and beam 3. If the active beam indicated by the first information is beam 2, the beam information of beam 2 can be determined based on the second information, that is, the beam information of the active beam is determined.

In the present disclosure, the first-type signaling may be RRC signaling, and the second-type signaling may be MAC CE signaling.

In an embodiment, the second information sent from the access network device is received through first-type signaling, and the second information includes the beam information of the candidate beam. The first information sent from the access network device is received through second-type signaling, and the first information is configured to indicate the active beam used by the PDCCH. The beam information of the active beam used by the Physical Downlink Control Channel (PDCCH) transmitted in the Downlink (DL) time unit and/or in the Subband Full Duplex (SBFD) time unit may be determined based on the first information and the second information. The PDCCH is detected based on the beam information in the direction of the active beam.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The beam information includes first beam information configured for the DL time unit and/or second beam information configured for the SBFD time unit.

For example, there are two sets of beam information, which are the first beam information configured for the DL time unit and the second beam information configured for the SBFD time unit, respectively.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The beam information includes first beam information and second beam information, and the first-type signaling includes a first information field and a second information field. The first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The beam information includes first beam information and second beam information, and the first-type signaling includes a first information field and a second information field. The first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit. A first TCI-State identity carried by the first information field is the same as a second TCI-State identity carried by the second information field. In this way, the number of TCI-State identities can be reduced.

In an embodiment, a candidate beam resource corresponding to the DL time unit is different from a candidate beam resource corresponding to the SBFD time unit. For example, candidate beam resources corresponding to the DL time unit are (beam #1, beam#2, beam#3, beam#4), and the corresponding TCI-State IDs are (0,1,2,3), respectively. That is, a TCI-State ID corresponding to beam#1 is "0", a TCI-State ID corresponding to beam#2 is "1", a TCI-State ID corresponding to beam#3 is "2", and a TCI-State ID corresponds to beam#4 is "3". Candidate beam resources corresponding to the SBFD time unit are (beam #5, beam#6, beam #7, beam#8), and the corresponding TCI-States are (0, 1, 2, 3), respectively. That is, a TCI-State ID corresponding to beam#5 is "0", a TCI-State ID corresponding to beam#6 is "1", a TCI-State ID corresponding to beam#7 is "2", and a TCI-State ID corresponds to beam#8 is "3". In this way, even if the first TCI-State identity carried by the first information field is the same as the second TCI-State identity carried by the second information field, the candidate beam indicated by the first TCI-State identity and the candidate beam indicated by the second TCI-State identity may be different. For example, the first TCI-State identity and the second TCI-State identity are both "0", and the candidate beams indicated by the first TCI-State identity and the second TCI-State identity may be beam #1 and beam#4, respectively.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The beam information includes first beam information and second beam information, and the first-type signaling includes a first information field and a second information field. The first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit. A first TCI-State identity carried by the first information field is the same as a second TCI-State identity carried by the second information field, and a Synchronization Signal Block index (SSB-index) corresponding to the first TCI-State identity is different from a SSB-index corresponding to the second TCI-State identity.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The beam information includes first beam information and second beam information, and the first-type signaling includes a first information field and a second information field. The first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit. A first TCI-State identity carried by the first information field is the same as a second TCI-State identity carried by the second information field, and a Non Zero Power Channel State Information Reference Signal Resource Identification (NZP-CSI-RS-resourceId) corresponding to the first TCI-State identity is different from a NZP-CSI-RS-resourceId corresponding to the second TCI-State identity.

For example, the first information field may be a newly added TCI-State-SBFD information element, which is used to indicate the Transmission Configuration Indicator-State (TCI-State) corresponding to the SBFD time unit. The second information field may be a TCI-State information element, and the first TCI-State identity (TCI-StateId) carried by the TCI- State-SBFD information element and the second TCI-State identity (TCI-StateId) carried by the TCI-State information element are the same. The Synchronization Signal Block index (SSB-index) corresponding to the first TCI-State identity and the SSB-index corresponding to the second TCI-State identity are different. The Non Zero Power Channel State Information Reference Signal Resource Identification (NZP-CSI-RS-resourceId) corresponding to the first TCI-State identity is different from the NZP-CSI-RS-resourceId corresponding to the second TCI-State identity.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The beam information includes first beam information configured for the DL time unit and/or second beam information configured for the SBFD time unit. The first-type signaling includes a third information field, and the third information field is configured to indicate Transmission Configuration Indicator-States (TCI-States) corresponding to the DL time unit and the SBFD time unit. The number of candidate beams that can be configured by the third information field is greater than a number threshold.

For example, the maximum number of candidate beams that can be configured by default is maxNrofTCI-StatesPDCCH, and the maximum number of candidate beams that can be configured in the third information field can be increased to be greater than the default number threshold.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The beam information includes first beam information configured for the DL time unit and/or second beam information configured for the SBFD time unit. The first-type signaling includes a third information field, and the third information field is configured to indicate Transmission Configuration Indicator-States (TCI-States) corresponding to the DL time unit and the SBFD time unit. The number of candidate beams that can be configured by the third information field is greater than the number of candidate beams that can be configured by the first information field; and/or the number of candidate beams that can be configured by the third information field is greater than the number of candidate beams that can be configured by the second information field.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the second-type signaling is single, and the first information indicates the active beam used by the DL time unit and the active beam used by the SBFD time unit. That is, the first information indicates the active beam corresponding to the DL time unit and the active beam corresponding to the SBFD time unit. It should be noted that the number of the second-type signaling is single, that is, one second-type signaling can indicate both the beam used by the DL time unit and the beam used by the SBFD time unit.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the second-type signaling is single, and the first information indicates the active beam used by the DL time unit and the active beam used by the SBFD time unit. The second-type signaling includes a fourth information field, a fifth information field and a sixth information field, the fourth information field indicates a beam used by the SBFD time unit, the fifth information field indicates a beam used by the DL time unit, and the sixth information field indicates control resource set identities (CORESET IDs) associated with PDCCHs corresponding to the DL time unit and the SBFD time unit. The control resource set identity used by the PDCCH corresponding to the DL time unit is the same as the control resource set identity used by the PDCCH corresponding to the SBFD time unit.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the second-type signaling is single, and the first information indicates the active beam used by the DL time unit and the active beam used by the SBFD time unit. The fourth information field indicates a first beam identity in a first information field or a third information field of first-type signaling carrying the second information, and the fifth information field indicates a second beam identity in a second information field or the third information field of the first-type signaling carrying the second information. The DL time unit uses a beam corresponding to the second beam identity.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the second-type signaling is single, and the first information indicates the active beam used by the DL time unit and the active beam used by the SBFD time unit. The second-type signaling includes a seventh information field, an eighth information field, a ninth information field and a tenth information field, the seventh information field indicates a control resource set identity associated with a PDCCH corresponding to the SBFD time unit, the eighth information field indicates a beam used by the SBFD time unit, the ninth information field indicates a control resource set identity associated with a PDCCH corresponding to the DL time unit, the tenth information field indicates a beam used by the DL time unit, and the PDCCH corresponding to the DL time unit and the PDCCH corresponding to the SBFD time unit use different control resource set identities.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the second-type signaling is single, and the first information indicates the active beam used by the DL time unit and the active beam used by the SBFD time unit. The second-type signaling includes a seventh information field, an eighth information field, a ninth information field and a tenth information field, the seventh information field indicates a control resource set identity associated with a PDCCH corresponding to the SBFD time unit, the eighth information field indicates a beam used by the SBFD time unit, the ninth information field indicates a control resource set identity associated with a PDCCH corresponding to the DL time unit, the tenth information field indicates a beam used by the DL time unit, and the PDCCH corresponding to the DL time unit and the PDCCH corresponding to the SBFD time unit use different control resource set identities. The seventh information field indicates a first beam identity in a first information field or a third information field of first-type signaling carrying the second information, and the SBFD time unit uses a beam corresponding to the first beam identity. The tenth information field indicates a second beam identity in a second information field or the third information field of the first-type signaling carrying the second information, and the DL time unit uses a beam corresponding to the second beam identity.

For example, the second-type signaling is a MAC CE, and a newly added field in the MAC CE indicates the beam used by the SBFD time unit. For example, a newly added 7-bit TCI-state-Id field (corresponding to the fourth information field) in the MAC CE is configured to indicate the beam used by the SBFD slot, and in this case, the PDCCHs in the DL slot and the SBFD slot use the same control resource set identity (CORESET ID). For example, a newly added 4 bits in the MAC CE indicate the CORESET ID associated with the PDCCH in the SBFD slot, and a newly added 7-bit TCI-state-Id field (corresponding to the fourth information field) in the MAC CE is configured to indicate the beam used by the SBFD. In this case, the PDCCHs in the DL and SBFD slots can use different CORESET IDs.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the second-type signaling is single, and the first information indicates the active beam used by the DL time unit and the active beam used by the SBFD time unit. The first information indicates a second beam identity in a second information field or a third information field of the first-type signaling carrying the second information.

In an embodiment, a reference signal corresponding to the second beam identity is a first reference signal or a second reference signal.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the second-type signaling is single, and the first information indicates the active beam used by the DL time unit and the active beam used by the SBFD time unit. The first information indicates a second beam identity in a second information field or a third information field of the first-type signaling carrying the second information. A beam corresponding to the second beam identity indicated by the first information carried by the second-type signaling is an active beam of the PDCCH in the DL time unit; or an active beam of the PDCCH in the SBFD time unit is a beam corresponding to a first beam identity, and the first beam identity is determined based on the second beam identity and a first offset value.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the second-type signaling is single, and the first information indicates the active beam used by the DL time unit and the active beam used by the SBFD time unit. The first information indicates a second beam identity in a second information field or a third information field of the first-type signaling carrying the second information. A beam corresponding to the second beam identity indicated by the first information carried by the second-type signaling is an active beam of the PDCCH in the DL time unit; or an active beam of the PDCCH in the SBFD time unit is a beam corresponding to a first beam identity, and the first beam identity is determined based on the second beam identity and a first offset value. A reference signal corresponding to the second beam identity is the first reference signal, and the first offset value is a first given value; and a reference signal corresponding to the second beam identity is the second reference signal, and the first offset value is a second given value.

In an embodiment, the first reference signal is a Channel State Information Reference Signal (CSI-RS), and the second reference signal is a Synchronization Signal Block (SSB).

For example, the second-type signaling is a MAC CE, and the MAC CE indicates the use of a beam corresponding to TCI-State Id#1, and a reference signal corresponding to TCI-State Id#1 is the CSI-RS.

For example, the MAC CE is used to indicate that the DL slot uses the beam corresponding to TCI-State Id#1 (the second beam identity).

For example, the MAC CE is used to indicate that the SBFD slot uses the beam corresponding to TCI-State Id#1+K1. Here, K1 is configured through the RRC or is a given value.

In an embodiment, the MAC CE indicates the use of the beam corresponding to TCI-State Id#1, and the reference signal corresponding to TCI-State Id#1 is the SSB.

For example, the MAC CE is used to indicate that the DL slot uses the beam corresponding to TCI-State Id#1.

For example, the MAC CE is used to indicate that the SBFD slot uses the beam corresponding to TCI-State Id#1+K2.

In an embodiment, K2 is not equal to K1, and K2 is configured through the RRC.

In an embodiment, K2 is equal to 0.

In an embodiment, K2 is equal to K1.

In an embodiment, when K2 is not configured, a value of K2 is a given value.

The above K1 and K2 correspond to the first offset value in the present disclosure.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the second-type signaling is two, and the second-type signaling includes first signaling and second signaling. An active beam indicated by the first information carried by the first signaling is a beam used by the DL time unit, and an active beam indicated by the first information carried by the second signaling is a beam used by the SBFD time unit.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the second-type signaling is two, and the second-type signaling includes first signaling and second signaling. An active beam indicated by the first information carried by the first signaling is a beam used by the DL time unit, and an active beam indicated by the first information carried by the second signaling is a beam used by the SBFD time unit. The second signaling includes an eleventh information field; and the eleventh information field indicates a first value, the second-type signaling is the first signaling, and an active beam indicated by the first information carried by the first signaling is the beam used by the DL time unit; or, the eleventh information field indicates a second value, the second-type signaling is the second signaling, and an active beam indicated by the first information carried by the second signaling is the beam used by the SBFD time unit.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the second-type signaling is two, and the second-type signaling includes first signaling and second signaling. An active beam indicated by the first information carried by the first signaling is a beam used by the DL time unit, and an active beam indicated by the first information carried by the second signaling is a beam used by the SBFD time unit. The second-type signaling is in the DL time unit, the second-type signaling is the first signaling, and an active beam indicated by the first information carried by the first signaling is the beam used by the DL time unit; or, the second-type signaling is in the SBFD time unit, the second-type signaling is the second signaling, and the active beam indicated by the first information carried by the second signaling is the beam used by the SBFD time unit.

In an embodiment, the second information sent from the access network device is received through first-type signaling, and the second information includes the beam information of the candidate beam. The first information sent from the access network device is received through second-type signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the second-type signaling is two, and the second-type signaling includes first signaling and second signaling. An active beam indicated by the first information carried by the first signaling is a beam used by the DL time unit, and an active beam indicated by the first information carried by the second signaling is a beam used by the SBFD time unit. The first information carried by the first signaling indicates a second beam identity in a second information field or a third information field, and the DL time unit uses a beam corresponding to the second beam identity. The first information carried by the second signaling indicates a first beam identity in a first information field or the third information field, and the SBFD time unit uses a beam corresponding to the first beam identity.

For example, the second-type signaling is a MAC CE, two MAC CEs indicate a beam used by a DL slot and a beam used by an SBFD slot, respectively, and the MAC CE indicates the beam corresponding to TCI-State Id #1. For example, a newly added 1bit in the MAC CE indicates that the MAC CE is used for the DL slot or the SBFD slot. If the newly added 1bit is "1", the MAC CE is used for the DL slot, and if the newly added 1bit is "0", the MAC CE is used for the SBFD slot. For another example, the MAC CE is in the DL slot, and the MAC CE is used to indicate the beam used by the DL slot; and the MAC CE is in the SBFD slot, and the MAC CE is used to indicate the beam used by the SBFD slot.

To better understand two scenarios involved in the above embodiments, that is:
Scenario 1 in which the number of the second-type signaling is single, in this scenario, the active beam used by the DL time unit and the active beam used by the SBFD time unit are indicated by one second-type signaling; the second-type signaling may be a MAC CE; and
Scenario 2 in which there are a plurality of second-type signaling, in this scenario, the active beam used by the DL time unit and the active beam used by the SBFD time unit are indicated by first signaling and second signaling, respectively, the second-type signaling includes the first signaling and the second signaling, the first signaling can be a first MAC CE, and the second signaling can be a second MAC CE,
the above scenarios are further described by the following example embodiments.

In an embodiment, Physical Downlink Control Channel (PDCCH) beam indication may be implemented through a Radio Resource Control (RRC) message or a Media Access Control (MAC) Control Element (CE), which may include:
in step a1, a RRC message configures a plurality of Transmission Configuration Indicator-States (TCI-states) used by the PDCCH.

For example, a control resource set identity (ControlResourceSetId) is in a control resource set (ControlResourceSet) information element. In addition, tci-StatesPDCCH-ToAddList SEQUENCE(SIZE (1..maxNrofTCI-StatesPDCCH)) OF TCI-StateId is configured in ControlResourceSet, where a value of the maxNrofTCI-StatesPDCCH is 64.

For example, TCI-state includes TCI-StateId, each TCI-StateId corresponds to one TCI-state, and TCI-state includes one Synchronization Signal/Physical Broadcast Channel Block ((SSB)-index or Non Zero Power Channel State Information Reference Signal Resource Identification (NZP-CSI-RS-resourceId).

For example, a search space (SearchSpace) information element contains a search space identity (SearchSpaceId) and ControlResourceSetId, i.e., one SearchSpace is bound to one ControlResourceSet information element, thereby confirming a time-frequency resource of the SearchSpace. In addition, the SearchSpace will configure the number of detections for different PDCCH aggregation levels.

The terminal performs PDCCH detection in the configured SearchSpace.

In step a2, a MAC CE is sent, and the MAC CE has a fixed 16-bit length. For details, reference may be made to FIG. 5b.

For example, 5 bits indicate a serving cell identity (ID).

For example, 4 bits indicate a control resource set identity (CORESET ID) associated with the PDCCH.

For example, 7 bits indicate a TCI-State identity (TCI-state-Id) (identity range 0-127) configured in the CORESET ID. The TCI-state-Id is used to indicate a beam direction of a SSB resource corresponding to a SSB-index corresponding to the TCI-state-Id configured in the CORESET ID or a beam direction of the NZP-CSI-RS-resource corresponding to NZP-CSI-RS-resourceId. The beam (active beam) direction is used for PDCCH transmission.

It should be noted that in the above embodiments, considering that the Tx Chains of the DL and SBFD slots are different, the optimal beams may be different, and different NZP-CSI-RS resources/SSBs are required for beam management. In this case, the TCI-state-Ids corresponding to the optimal beams of the DL and SBFD slots have the following differences: 1. the optimal beams used by the DL slot and the SBFD slot are the same, but the NZP-CSI-RS resourceIds or SSB indexes are different, and the TCI-state-Ids of the DL slot and the SBFD slot are different; 2. the optimal beams of the DL and SBFD slots are different, and the corresponding TCI-state-Ids are different. Therefore, different active beams need to be indicated for transmission in the DL and SBFD slots. When the MAC CE indicates the activated TCI-state-Id (TCI state) is used for PDCCH transmission, there is a certain effectiveness delay: the TCI state takes effect 3ms after the HARQ-ACK slot corresponding to the activated PDSCH (MAC CE) that carries the TCI state.

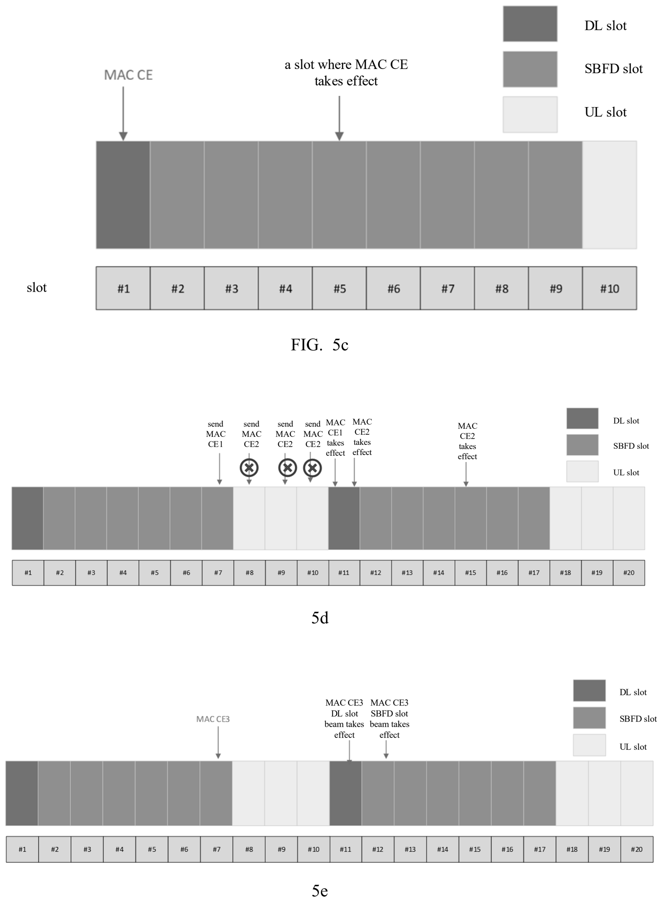

For example, referring to FIG. 5c, slot #1 corresponds to the DL time unit, and slot #2 to slot #9 correspond to the SBFD time unit. The TCI-state-Ids corresponding to the optimal beams of the DL time unit and the SBFD time unit are different, that is, the beam used in slot #1 and the beam used in slot #2 are different. The MAC CE of slot #1 indicates the optimal beam of the PDCCH of the SBFD time unit. It is assumed that the MAC CE takes effect in slot #5, and accordingly, due to the existence of the effectiveness delay, the PDCCHs of slot #2, slot #3 and slot #4 before slot #5 cannot use the optimal beam.

Since the MAC CE indicates that the TCI-state-Id used for PDCCH transmission has the effectiveness delay, the indicated TCI states of the DL and SBFD slots may not be used correspondingly in the DL and SBFD slots.

For example, referring to FIG. 5d, the TCI-state-Ids corresponding to the optimal beams of slot #11 and slots #12-17 are different, that is, a beam Beam#m used in slot #11 and a beam Beam#n used in slots #12-17 are different. If MAC CE1 in slot #7 indicates the optimal beam Beam#m of DL slot #11, MAC CE2 needs to be sent in slot #8 and a slot before slot #8 to indicate the optimal beam Beam#n of slot #12. However, slot #8 is a UL slot, and the terminal cannot receive MAC CE2 on the UL slot. If MAC CE2 is sent in slot #7, slots #11-17 cannot determine whether to use the beam indicated by MAC CE1 or MAC CE2. In this case, MAC CE2 can be sent at the earliest in slot #11 and take effect at the earliest in slot #15. In this case, slots #12-14 cannot use Beam#n.

In this way, if the above method is adopted, due to the delay problem, after different MAC CEs are received in the time unit, the optimal beam indicated by which MAC CE is used cannot be determined. In view of this, the following embodiment can be used to implement the determination of the optimal beam indicated by which MAC CE being used after different MAC CEs are received in the time unit.

In an embodiment, referring to FIG. 5e, which is an embodiment corresponding to the above-mentioned scenario 1, one MAC CE3 (corresponding to the second-type signaling in the present disclosure) is used and sent in slot #7. MAC CE3 indicates both the beam Beam#m of the DL slot and the beam Beam#n of the SBFD slot. For example, a first information field of MAC CE3 is used to indicate the beam Beam#m used by the DL slot, and a second information field of MAC CE3 is used to indicate the beam Beam#n used by the SBFD slot. In this way, Beam#m and Beam#n are used in the DL and SBFD slots, respectively.

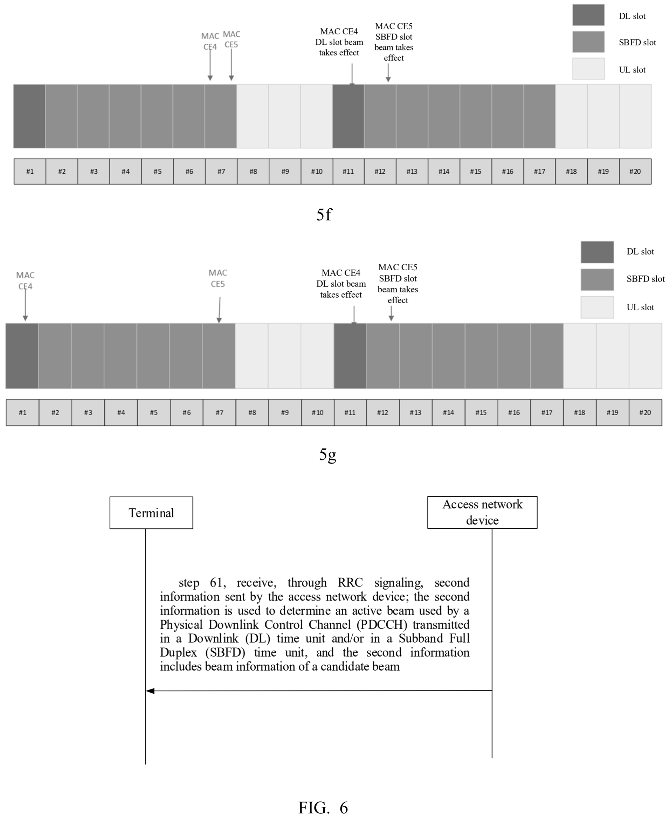

For example, referring to FIG. 5f, which is an embodiment corresponding to the above-mentioned scenario 2, two MAC CEs are used, for example, MAC CE4 (corresponding to the first signaling in the present disclosure, the first signaling is the second-type signaling) and MAC CE5 (corresponding to the second signaling in the present disclosure, the second signaling is the second-type signaling) are respectively used to indicate the beams used by the DL slot and the SBFD slot, where MAC CE4 indicates the beam Beam#m used by the DL slot, and MAC CE5 indicates the beam Beam#n used by the SBFD slot.

In an embodiment, a newly added field in the MAC CE can be used to indicate whether the MAC CE is used for the DL slot or the SBFD slot. For example, if the newly added field in the MAC CE carries "0", the MAC CE indicates the beam used by the DL slot. Alternatively, if the newly added field in the MAC CE carries "1", the MAC CE indicates the beam used by the SBFD slot. For example, if the newly added field in the MAC CE4 carries "0", MAC CE4 indicates the beam used by the DL slot, and if the newly added field in the MAC CE5 carries "1", MAC CE5 indicates the beam used by the SBFD slot.

Referring to FIG. 5g, in another embodiment, a slot in which the MAC CE is located can be used to implicitly indicate whether the beam indicated by the MAC CE is used for the DL slot or the SBFD slot. For example, if the MAC CE (e.g., MAC CE4 in FIG. 5g) is in the DL slot, the MAC CE is used to indicate the beam used by the DL slot. Alternatively, if the MAC CE (e.g., MAC CE5 in FIG. 5g) is in the SBFD slot, the MAC CE is used to indicate the beam used by the SBFD slot. For example, if MAC CE4 is in the DL slot, MAC CE4 is used to indicate the beam used by the DL slot, and if MAC CES is in the SBFD slot, MAC CES is used to indicate the beam used by the SBFD slot.

In embodiments of the present disclosure, the first information sent from the access network device is received, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, the second information includes the beam information of the candidate beam, and the active beam used to transmit the PDCCH in the DL time unit and the active beam used to transmit the PDCCH in the SBFD time unit are different. Here, since the first information indicates the active beam, after receiving the first information, the terminal can determine, based on the indicated active beam and the beam information of the candidate beam included in the second information, the active beam used by the Physical Downlink Control Channel (PDCCH) transmitted in the Downlink (DL) time unit and/or in the Subband Full Duplex (SBFD) time unit. Since the active beam used to transmit the PDCCH in the DL time unit and the active beam used to transmit the PDCCH in the SBFD time unit are different, active beams can be configured for the DL time unit and the SBFD time unit, respectively, to perform the PDCCH transmission, making the PDCCH transmission more flexible and reliable.

It should be noted that those skilled in the art can understand that the method provided in embodiments of the present disclosure can be executed alone or together with some methods in the embodiments of the present disclosure or some methods in the related arts.

As shown in FIG. 6, embodiment of the present disclosures provide a method for determining an active beam, the method is performed by a terminal and includes:
in step 61, second information sent from an access network device is received through RRC signaling; and
the second information is used to determine an active beam used by a Physical Downlink Control Channel (PDCCH) transmitted in a Downlink (DL) time unit and/or in a Subband Full Duplex (SBFD) time unit, and the second information includes beam information of a candidate beam.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different.

In an embodiment, the second information sent from the access network device is received through the RRC signaling, and the second information includes the beam information of the candidate beam. The first information sent from the access network device is received through MAC CE signaling, and the first information is configured to indicate the active beam. Beam information of the active beam can be determined based on the first information and the second information. There may be a plurality of candidate beams. For example, the candidate beams include beam 1, beam 2, and beam 3. If the active beam indicated by the first information is beam 2, the beam information of beam 2 can be determined based on the second information, that is, the beam information of the active beam is determined.

In an embodiment, the second information sent from the access network device is received through the RRC signaling, and the second information includes the beam information of the candidate beam. The first information sent from the access network device is received through MAC CE signaling, and the first information is configured to indicate the active beam used by the PDCCH. The beam information of the active beam used by the Physical Downlink Control Channel (PDCCH) transmitted in the Downlink (DL) time unit and/or in the Subband Full Duplex (SBFD) time unit may be determined based on the first information and the second information. The PDCCH is detected based on the beam information in the direction of the active beam.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The beam information includes first beam information configured for the DL time unit and/or second beam information configured for the SBFD time unit.

For example, there are two sets of beam information, which are the first beam information configured for the DL time unit and the second beam information configured for the SBFD time unit, respectively.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The beam information includes first beam information and second beam information, and the RRC signaling includes a first information field and a second information field. The first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The beam information includes first beam information and second beam information, and the RRC signaling includes a first information field and a second information field. The first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit. A first TCI-State identity carried by the first information field is the same as a second TCI-State identity carried by the second information field.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The beam information includes first beam information and second beam information, and the RRC signaling includes a first information field and a second information field. The first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit. A first TCI-State identity carried by the first information field is the same as a second TCI-State identity carried by the second information field, and a Synchronization Signal Block index (SSB-index) corresponding to the first TCI-State identity is different from a SSB-index corresponding to the second TCI-State identity.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The beam information includes first beam information and second beam information, and the RRC signaling includes a first information field and a second information field. The first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit. A first TCI-State identity carried by the first information field is the same as a second TCI-State identity carried by the second information field, and a Non Zero Power Channel State Information Reference Signal Resource Identification (NZP-CSI-RS-resourceId) corresponding to the first TCI-State identity is different from a NZP-CSI-RS-resourceId corresponding to the second TCI-State identity.

For example, the first information field may be a newly added TCI-State-SBFD information element, which is used to indicate the Transmission Configuration Indicator-State (TCI-State) corresponding to the SBFD time unit. The second information field may be a TCI-State information element, and the first TCI-State identity (TCI-StateId) carried by the TCI- State-SBFD information element and the second TCI-State identity (TCI-StateId) carried by the TCI-State information element are the same. The Synchronization Signal Block index (SSB-index) corresponding to the first TCI-State identity and the SSB-index corresponding to the second TCI-State identity are different. The Non Zero Power Channel State Information Reference Signal Resource Identification (NZP-CSI-RS-resourceId) corresponding to the first TCI-State identity is different from the NZP-CSI-RS-resourceId corresponding to the second TCI-State identity.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The beam information includes first beam information configured for the DL time unit and/or second beam information configured for the SBFD time unit. The RRC signaling includes a third information field, and the third information field is configured to indicate Transmission Configuration Indicator-States (TCI-States) corresponding to the DL time unit and the SBFD time unit. The number of candidate beams that can be configured by the third information field is greater than a number threshold.

For example, the maximum number of candidate beams that can be configured by default is maxNrofTCI-StatesPDCCH, and the maximum number of candidate beams that can be configured in the third information field can be increased to be greater than the default number threshold.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The beam information includes first beam information configured for the DL time unit and/or second beam information configured for the SBFD time unit. The RRC signaling includes a third information field, and the third information field is configured to indicate Transmission Configuration Indicator-States (TCI-States) corresponding to the DL time unit and the SBFD time unit. The number of candidate beams that can be configured by the third information field is greater than the number of candidate beams that can be configured by the first information field; and/or the number of candidate beams that can be configured by the third information field is greater than the number of candidate beams that can be configured by the second information field.

It should be noted that those skilled in the art can understand that the method provided in embodiments of the present disclosure can be executed alone or together with some methods in the embodiments of the present disclosure or some methods in the related arts.

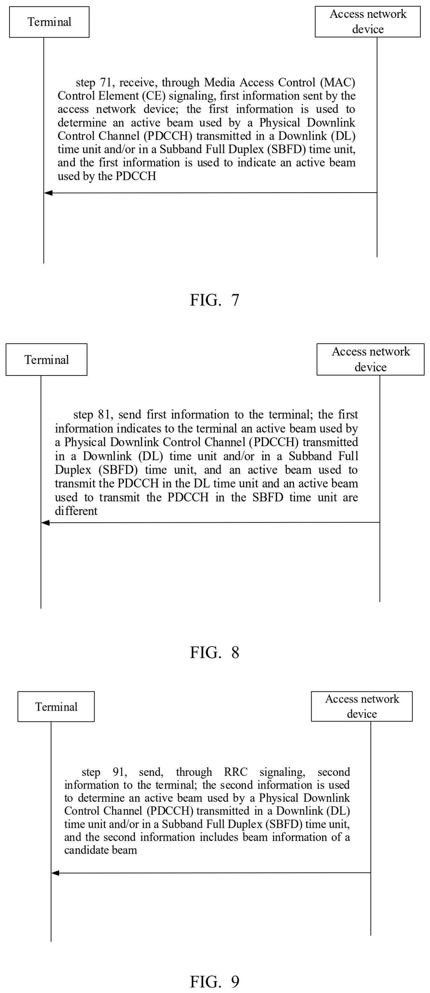

As shown in FIG. 7, embodiments of the present disclosure provide a method for determining an active beam, the method is performed by a terminal and includes:
in step 71, first information sent from an access network device is received through Media Access Control (MAC) Control Element (CE) signaling; and
the first information is used to determine an active beam used by a Physical Downlink Control Channel (PDCCH) transmitted in a Downlink (DL) time unit and/or in a Subband Full Duplex (SBFD) time unit, and the first information is used to indicate an active beam used by the PDCCH.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is single, and the first information indicates the active beam used by the DL time unit and the active beam used by the SBFD time unit. That is, the first information indicates the active beam corresponding to the DL time unit and the active beam corresponding to the SBFD time unit. It should be noted that the number of the MAC CE signaling is single, that is, one MAC CE signaling can indicate both the beam used by the DL time unit and the beam used by the SBFD time unit.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is single, and the first information indicates the active beam used by the DL time unit and the active beam used by the SBFD time unit. The MAC CE signaling includes a fourth information field, a fifth information field and a sixth information field, the fourth information field indicates a beam used by the SBFD time unit, the fifth information field indicates a beam used by the DL time unit, and the sixth information field indicates control resource set identities (CORESET IDs) associated with PDCCHs corresponding to the DL time unit and the SBFD time unit. The control resource set identity used by the PDCCH corresponding to the DL time unit is the same as the control resource set identity used by the PDCCH corresponding to the SBFD time unit.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is single, and the first information indicates the active beam used by the DL time unit and the active beam used by the SBFD time unit. The fourth information field indicates a first beam identity in a first information field or a third information field of RRC signaling carrying the second information, and the fifth information field indicates a second beam identity in a second information field or the third information field of the RRC signaling carrying the second information. The DL time unit uses a beam corresponding to the second beam identity.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is single, and the first information indicates the active beam used by the DL time unit and the active beam used by the SBFD time unit. The MAC CE signaling includes a seventh information field, an eighth information field, a ninth information field and a tenth information field, the seventh information field indicates a control resource set identity associated with a PDCCH corresponding to the SBFD time unit, the eighth information field indicates a beam used by the SBFD time unit, the ninth information field indicates a control resource set identity associated with a PDCCH corresponding to the DL time unit, the tenth information field indicates a beam used by the DL time unit, and the PDCCH corresponding to the DL time unit and the PDCCH corresponding to the SBFD time unit use different control resource set identities.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is single, and the first information indicates the active beam used by the DL time unit and the active beam used by the SBFD time unit. The MAC CE signaling includes a seventh information field, an eighth information field, a ninth information field and a tenth information field, the seventh information field indicates a control resource set identity associated with a PDCCH corresponding to the SBFD time unit, the eighth information field indicates a beam used by the SBFD time unit, the ninth information field indicates a control resource set identity associated with a PDCCH corresponding to the DL time unit, the tenth information field indicates a beam used by the DL time unit, and the PDCCH corresponding to the DL time unit and the PDCCH corresponding to the SBFD time unit use different control resource set identities. The seventh information field indicates a first beam identity in a first information field or a third information field of RRC signaling carrying the second information, and the SBFD time unit uses a beam corresponding to the first beam identity. The tenth information field indicates a second beam identity in a second information field or the third information field of the RRC signaling carrying the second information, and the DL time unit uses a beam corresponding to the second beam identity.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is single, and the first information indicates the active beam used by the DL time unit and the active beam used by the SBFD time unit. The first information indicates a second beam identity in a second information field or a third information field of the RRC signaling carrying the second information.

In an embodiment, a reference signal corresponding to the second beam identity is a first reference signal or a second reference signal.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is single, and the first information indicates the active beam used by the DL time unit and the active beam used by the SBFD time unit. The first information indicates a second beam identity in a second information field or a third information field of the RRC signaling carrying the second information. A beam corresponding to the second beam identity indicated by the first information carried by the MAC CE signaling is an active beam of the PDCCH in the DL time unit; or an active beam of the PDCCH in the SBFD time unit is a beam corresponding to a first beam identity, and the first beam identity is determined based on the second beam identity and a first offset value.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is single, and the first information indicates the active beam used by the DL time unit and the active beam used by the SBFD time unit. The first information indicates a second beam identity in a second information field or a third information field of the RRC signaling carrying the second information. A beam corresponding to the second beam identity indicated by the first information carried by the MAC CE signaling is an active beam of the PDCCH in the DL time unit; or an active beam of the PDCCH in the SBFD time unit is a beam corresponding to a first beam identity, and the first beam identity is determined based on the second beam identity and a first offset value. A reference signal corresponding to the second beam identity is the first reference signal, and the first offset value is a first given value; and a reference signal corresponding to the second beam identity is the second reference signal, and the first offset value is a second given value.

In an embodiment, the first reference signal is a Channel State Information Reference Signal (CSI-RS), and the second reference signal is a Synchronization Signal Block (SSB).

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is two, and the MAC CE signaling includes first MAC CE signaling and second MAC CE signaling. An active beam indicated by the first information carried by the first MAC CE signaling is a beam used by the DL time unit, and an active beam indicated by the first information carried by the second MAC CE signaling is a beam used by the SBFD time unit.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is two, and the MAC CE signaling includes first MAC CE signaling and second MAC CE signaling. An active beam indicated by the first information carried by the first MAC CE signaling is a beam used by the DL time unit, and an active beam indicated by the first information carried by the second MAC CE signaling is a beam used by the SBFD time unit. The second MAC CE signaling includes an eleventh information field; and the eleventh information field indicates a first value, the MAC CE signaling is the first MAC CE signaling, and an active beam indicated by the first information carried by the first MAC CE signaling is the beam used by the DL time unit; or, the eleventh information field indicates a second value, the MAC CE signaling is the second MAC CE signaling, and an active beam indicated by the first information carried by the second MAC CE signaling is the beam used by the SBFD time unit.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is two, and the MAC CE signaling includes first MAC CE signaling and second MAC CE signaling. An active beam indicated by the first information carried by the first MAC CE signaling is a beam used by the DL time unit, and an active beam indicated by the first information carried by the second MAC CE signaling is a beam used by the SBFD time unit. The MAC CE signaling is in the DL time unit, the MAC CE signaling is the first MAC CE signaling, and an active beam indicated by the first information carried by the first MAC CE signaling is the beam used by the DL time unit; or, the MAC CE signaling is in the SBFD time unit, the MAC CE signaling is the second MAC CE signaling, and the active beam indicated by the first information carried by the second MAC CE signaling is the beam used by the SBFD time unit.

In an embodiment, the second information sent from the access network device is received through the RRC signaling, and the second information includes the beam information of the candidate beam. The first information sent from the access network device is received through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is two, and the MAC CE signaling includes first MAC CE signaling and second MAC CE signaling. An active beam indicated by the first information carried by the first MAC CE signaling is a beam used by the DL time unit, and an active beam indicated by the first information carried by the second MAC CE signaling is a beam used by the SBFD time unit. The first information carried by the first MAC CE signaling indicates a second beam identity in a second information field or a third information field, and the DL time unit uses a beam corresponding to the second beam identity. The first information carried by the second MAC CE signaling indicates a first beam identity in a first information field or the third information field, and the SBFD time unit uses a beam corresponding to the first beam identity.

It should be noted that those skilled in the art can understand that the method provided in embodiments of the present disclosure can be executed alone or together with some methods in the embodiments of the present disclosure or some methods in the related arts.

As shown in FIG. 8, embodiment of the present disclosure provide a method for determining an active beam, the method is performed by an access network device and includes:
in step 81, first information is sent to a terminal; and
the first information indicates to the terminal an active beam used by a Physical Downlink Control Channel (PDCCH) transmitted in a Downlink (DL) time unit and/or in a Subband Full Duplex (SBFD) time unit, and an active beam used to transmit the PDCCH in the DL time unit and an active beam used to transmit the PDCCH in the SBFD time unit are different.

In an embodiment, the first information is sent to the terminal, and the first information is used to indicate the active beam. Second information is sent to the terminal, and the second information includes beam information of a candidate beam. The first information and the second information are used by the terminal to determine the active beam used by the Physical Downlink Control Channel (PDCCH) transmitted in the Downlink (DL) time unit and/or in the Subband Full Duplex (SBFD) time unit, and the active beam used to transmit the PDCCH in the DL time unit and the active beam used to transmit the PDCCH in the SBFD time unit are different.

Here, the terminal involved in the present disclosure may be, but is not limited to, a mobile phone, a wearable device, a vehicle-mounted terminal, a Road Side Unit (RSU), a smart home terminal, an industrial sensor device and/or a medical device, etc. In some embodiments, the terminal may be a Redcap terminal or a predetermined version of a New Radio (NR) terminal (e.g., an R17 NR terminal).

Here, the access network device involved in the present disclosure may be various types of base stations, for example, a base station of the third generation mobile communication (3G) network, a base station of the fourth generation mobile communication (4G) network, a base station of the fifth generation mobile communication (5G) network, or other evolved base stations.

In an embodiment, the time unit may be a symbol, a mini-slot, a slot, a subframe, or a radio frame, which is not limited here and may be a time unit of other time granularity.

In an embodiment, the second information is sent to the terminal, and the second information includes the beam information of the candidate beam. The first information is sent to the terminal, and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit, and the active beam used to transmit the PDCCH in the DL time unit and the active beam used to transmit the PDCCH in the SBFD time unit are different.

In an embodiment, the second information is sent to the terminal through first-type signaling, and the second information includes the beam information of the candidate beam. The first information is sent to the terminal through second-type signaling; and the first information is configured to indicate the active beam. The terminal can determine the beam information of the active beam based on the first and second information. There may be a plurality of candidate beams. For example, the candidate beams include beam 1, beam 2, and beam 3. If the active beam indicated by the first information is beam 2, the beam information of beam 2 can be determined based on the second information, that is, the beam information of the active beam is determined.

In the present disclosure, the first-type signaling may be RRC signaling, and the second-type signaling may be MAC CE signaling.

In an embodiment, the second information is sent to the terminal through first-type signaling, and the second information includes the beam information of the candidate beam. The first information is sent to the terminal through second-type signaling, and the first information indicates the active beam used by the PDCCH. Based on the first and second information, the terminal can determine the beam information of the active beam used by the Physical Downlink Control Channel (PDCCH) transmitted in on the Downlink (DL) time unit and/or on the Subband Full Duplex (SBFD) time unit. The PDCCH is detected based on the beam information in the direction of the active beam.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit, and the active beam used to transmit the PDCCH in the DL time unit and the active beam used to transmit the PDCCH in the SBFD time unit are different. The beam information includes first beam information configured for the DL time unit and/or second beam information configured for the SBFD time unit.

For example, there are two sets of beam information, which are the first beam information configured for the DL time unit and the second beam information configured for the SBFD time unit, respectively.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The beam information includes first beam information and second beam information, and the first-type signaling includes a first information field and a second information field. The first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The beam information includes first beam information and second beam information, and the first-type signaling includes a first information field and a second information field. The first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit. A first TCI-State identity carried by the first information field is the same as a second TCI-State identity carried by the second information field. In this way, the number of TCI-State identities can be reduced.

In an embodiment, a candidate beam resource corresponding to the DL time unit is different from a candidate beam resource corresponding to the SBFD time unit. For example, candidate beam resources corresponding to the DL time unit are (beam #1, beam#2, beam#3, beam#4), and the corresponding TCI-State IDs are (0,1,2,3), respectively. That is, a TCI-State ID corresponding to beam#1 is "0", a TCI-State ID corresponding to beam#2 is "1", a TCI-State ID corresponding to beam#3 is "2", and a TCI-State ID corresponds to beam#4 is "3". Candidate beam resources corresponding to the SBFD time unit are (beam #5, beam#6, beam #7, beam#8), and the corresponding TCI-States are (0, 1, 2, 3), respectively. That is, a TCI-State ID corresponding to beam#5 is "0", a TCI-State ID corresponding to beam#6 is "1", a TCI-State ID corresponding to beam#7 is "2", and a TCI-State ID corresponds to beam#8 is "3". In this way, even if the first TCI-State identity carried by the first information field is the same as the second TCI-State identity carried by the second information field, the candidate beam indicated by the first TCI-State identity and the candidate beam indicated by the second TCI-State identity may be different. For example, the first TCI-State identity and the second TCI-State identity are both "0", and the candidate beams indicated by the first TCI-State identity and the second TCI-State identity may be beam #1 and beam#4, respectively.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The beam information includes first beam information and second beam information, and the first-type signaling includes a first information field and a second information field. The first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit. A first TCI-State identity carried by the first information field is the same as a second TCI-State identity carried by the second information field, and a Synchronization Signal Block index (SSB-index) corresponding to the first TCI-State identity is different from a SSB-index corresponding to the second TCI-State identity.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The beam information includes first beam information and second beam information, and the first-type signaling includes a first information field and a second information field. The first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit. A first TCI-State identity carried by the first information field is the same as a second TCI-State identity carried by the second information field, and a Non Zero Power Channel State Information Reference Signal Resource Identification (NZP-CSI-RS-resourceId) corresponding to the first TCI-State identity is different from a NZP-CSI-RS-resourceId corresponding to the second TCI-State identity.

For example, the first information field may be a newly added TCI-State-SBFD information element, which is used to indicate the Transmission Configuration Indicator-State (TCI-State) corresponding to the SBFD time unit. The second information field may be a TCI-State information element, and the first TCI-State identity (TCI-StateId) carried by the TCI- State-SBFD information element and the second TCI-State identity (TCI-StateId) carried by the TCI-State information element are the same. The Synchronization Signal Block index (SSB-index) corresponding to the first TCI-State identity and the SSB-index corresponding to the second TCI-State identity are different. The Non Zero Power Channel State Information Reference Signal Resource Identification (NZP-CSI-RS-resourceId) corresponding to the first TCI-State identity is different from the NZP-CSI-RS-resourceId corresponding to the second TCI-State identity.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The beam information includes first beam information configured for the DL time unit and/or second beam information configured for the SBFD time unit. The first-type signaling includes a third information field, and the third information field is configured to indicate Transmission Configuration Indicator-States (TCI-States) corresponding to the DL time unit and the SBFD time unit. The number of candidate beams that can be configured by the third information field is greater than a number threshold.

For example, the maximum number of candidate beams that can be configured by default is maxNrofTCI-StatesPDCCH, and the maximum number of candidate beams that can be configured in the third information field can be increased to be greater than the default number threshold.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The beam information includes first beam information configured for the DL time unit and/or second beam information configured for the SBFD time unit. The first-type signaling includes a third information field, and the third information field is configured to indicate Transmission Configuration Indicator-States (TCI-States) corresponding to the DL time unit and the SBFD time unit. The number of candidate beams that can be configured by the third information field is greater than the number of candidate beams that can be configured by the first information field; and/or the number of candidate beams that can be configured by the third information field is greater than the number of candidate beams that can be configured by the second information field.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The number of the second-type signaling is single, and the first information indicates the active beam used by the DL time unit and the active beam used by the SBFD time unit. That is, the first information indicates the active beam corresponding to the DL time unit and the active beam corresponding to the SBFD time unit. It should be noted that the number of the second-type signaling is single, that is, one second-type signaling can indicate both the beam used by the DL time unit and the beam used by the SBFD time unit.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The number of the second-type signaling is single, and the first information indicates the active beam used by the DL time unit and the active beam used by the SBFD time unit. The second-type signaling includes a fourth information field, a fifth information field and a sixth information field, the fourth information field indicates a beam used by the SBFD time unit, the fifth information field indicates a beam used by the DL time unit, and the sixth information field indicates control resource set identities (CORESET IDs) associated with PDCCHs corresponding to the DL time unit and the SBFD time unit. The control resource set identity used by the PDCCH corresponding to the DL time unit is the same as the control resource set identity used by the PDCCH corresponding to the SBFD time unit.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The number of the second-type signaling is single, and the first information indicates the active beam used by the DL time unit and the active beam used by the SBFD time unit. The fourth information field indicates a first beam identity in a first information field or a third information field of first-type signaling carrying the second information, and the fifth information field indicates a second beam identity in a second information field or the third information field of the first-type signaling carrying the second information. The DL time unit uses a beam corresponding to the second beam identity.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The number of the second-type signaling is single, and the first information indicates the active beam used by the DL time unit and the active beam used by the SBFD time unit. The second-type signaling includes a seventh information field, an eighth information field, a ninth information field and a tenth information field, the seventh information field indicates a control resource set identity associated with a PDCCH corresponding to the SBFD time unit, the eighth information field indicates a beam used by the SBFD time unit, the ninth information field indicates a control resource set identity associated with a PDCCH corresponding to the DL time unit, the tenth information field indicates a beam used by the DL time unit, and the PDCCH corresponding to the DL time unit and the PDCCH corresponding to the SBFD time unit use different control resource set identities.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The number of the second-type signaling is single, and the first information indicates the active beam used by the DL time unit and the active beam used by the SBFD time unit. The second-type signaling includes a seventh information field, an eighth information field, a ninth information field and a tenth information field, the seventh information field indicates a control resource set identity associated with a PDCCH corresponding to the SBFD time unit, the eighth information field indicates a beam used by the SBFD time unit, the ninth information field indicates a control resource set identity associated with a PDCCH corresponding to the DL time unit, the tenth information field indicates a beam used by the DL time unit, and the PDCCH corresponding to the DL time unit and the PDCCH corresponding to the SBFD time unit use different control resource set identities. The seventh information field indicates a first beam identity in a first information field or a third information field of first-type signaling carrying the second information, and the SBFD time unit uses a beam corresponding to the first beam identity. The tenth information field indicates a second beam identity in a second information field or the third information field of the first-type signaling carrying the second information, and the DL time unit uses a beam corresponding to the second beam identity.

For example, the second-type signaling is a MAC CE, and a newly added field in the MAC CE indicates the beam used by the SBFD time unit. For example, a newly added 7-bit TCI-state-Id field (corresponding to the fourth information field) in the MAC CE is configured to indicate the beam used by the SBFD slot, and in this case, the PDCCHs in the DL slot and the SBFD slot use the same control resource set identity (CORESET ID). For example, a newly added 4 bits in the MAC CE indicate the CORESET ID associated with the PDCCH in the SBFD slot, and a newly added 7-bit TCI-state-Id field (corresponding to the fourth information field) in the MAC CE is configured to indicate the beam used by the SBFD. In this case, the PDCCHs in the DL and SBFD slots can use different CORESET IDs.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The number of the second-type signaling is single, and the first information indicates the active beam used by the DL time unit and the active beam used by the SBFD time unit. The first information indicates a second beam identity in a second information field or a third information field of the first-type signaling carrying the second information.

In an embodiment, a reference signal corresponding to the second beam identity is a first reference signal or a second reference signal.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The number of the second-type signaling is single, and the first information indicates the active beam used by the DL time unit and the active beam used by the SBFD time unit. The first information indicates a second beam identity in a second information field or a third information field of the first-type signaling carrying the second information. A beam corresponding to the second beam identity indicated by the first information carried by the second-type signaling is an active beam of the PDCCH in the DL time unit; or an active beam of the PDCCH in the SBFD time unit is a beam corresponding to a first beam identity, and the first beam identity is determined based on the second beam identity and a first offset value.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The number of the second-type signaling is single, and the first information indicates the active beam used by the DL time unit and the active beam used by the SBFD time unit. The first information indicates a second beam identity in a second information field or a third information field of the first-type signaling carrying the second information. A beam corresponding to the second beam identity indicated by the first information carried by the second-type signaling is an active beam of the PDCCH in the DL time unit; or an active beam of the PDCCH in the SBFD time unit is a beam corresponding to a first beam identity, and the first beam identity is determined based on the second beam identity and a first offset value. A reference signal corresponding to the second beam identity is the first reference signal, and the first offset value is a first given value; and a reference signal corresponding to the second beam identity is the second reference signal, and the first offset value is a second given value.

In an embodiment, the first reference signal is a Channel State Information Reference Signal (CSI-RS), and the second reference signal is a Synchronization Signal Block (SSB).

For example, the second-type signaling is a MAC CE, and the MAC CE indicates the use of a beam corresponding to TCI-State Id#1, and a reference signal corresponding to TCI-State Id#1 is the CSI-RS.

For example, the MAC CE is used to indicate that the DL slot uses the beam corresponding to TCI-State Id#1 (the second beam identity).

For example, the MAC CE is used to indicate that the SBFD slot uses the beam corresponding to TCI-State Id#1+K1. Here, K1 is configured through the RRC or is a given value.

In an embodiment, the MAC CE indicates the use of the beam corresponding to TCI-State Id#1, and the reference signal corresponding to TCI-State Id#1 is the SSB.

For example, the MAC CE is used to indicate that the DL slot uses the beam corresponding to TCI-State Id#1.

For example, the MAC CE is used to indicate that the SBFD slot uses the beam corresponding to TCI-State Id#1+K2.

In an embodiment, K2 is not equal to K1, and K2 is configured through the RRC.

In an embodiment, K2 is equal to 0.

In an embodiment, K2 is equal to K1.

In an embodiment, when K2 is not configured, a value of K2 is a given value.

The above K1 and K2 correspond to the first offset value in the present disclosure.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The number of the second-type signaling is two, and the second-type signaling includes first signaling and second signaling. An active beam indicated by the first information carried by the first signaling is a beam used by the DL time unit, and an active beam indicated by the first information carried by the second signaling is a beam used by the SBFD time unit.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The number of the second-type signaling is two, and the second-type signaling includes first signaling and second signaling. An active beam indicated by the first information carried by the first signaling is a beam used by the DL time unit, and an active beam indicated by the first information carried by the second signaling is a beam used by the SBFD time unit. The second signaling includes an eleventh information field; and the eleventh information field indicates a first value, the second-type signaling is the first signaling, and an active beam indicated by the first information carried by the first signaling is the beam used by the DL time unit; or, the eleventh information field indicates a second value, the second-type signaling is the second signaling, and an active beam indicated by the first information carried by the second signaling is the beam used by the SBFD time unit.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The number of the second-type signaling is two, and the second-type signaling includes first signaling and second signaling. An active beam indicated by the first information carried by the first signaling is a beam used by the DL time unit, and an active beam indicated by the first information carried by the second signaling is a beam used by the SBFD time unit. The second-type signaling is in the DL time unit, the second-type signaling is the first signaling, and an active beam indicated by the first information carried by the first signaling is the beam used by the DL time unit; or, the second-type signaling is in the SBFD time unit, the second-type signaling is the second signaling, and the active beam indicated by the first information carried by the second signaling is the beam used by the SBFD time unit.

In an embodiment, the second information is sent to the terminal through first-type signaling, and the second information includes the beam information of the candidate beam. The first information is sent to the terminal through second-type signaling; and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit. The number of the second-type signaling is two, and the second-type signaling includes first signaling and second signaling. An active beam indicated by the first information carried by the first signaling is a beam used by the DL time unit, and an active beam indicated by the first information carried by the second signaling is a beam used by the SBFD time unit. The first information carried by the first signaling indicates a second beam identity in a second information field or a third information field, and the DL time unit uses a beam corresponding to the second beam identity. The first information carried by the second signaling indicates a first beam identity in a first information field or the third information field, and the SBFD time unit uses a beam corresponding to the first beam identity.

For example, the second-type signaling is a MAC CE, two MAC CEs indicate a beam used by a DL slot and a beam used by an SBFD slot, respectively, and the MAC CE indicates the beam corresponding to TCI-State Id #1. For example, a newly added 1bit in the MAC CE indicates that the MAC CE is used for the DL slot or the SBFD slot. If the newly added 1bit is "1", the MAC CE is used for the DL slot, and if the newly added 1bit is "0", the MAC CE is used for the SBFD slot. For another example, the MAC CE is in the DL slot, and the MAC CE is used to indicate the beam used by the DL slot; and the MAC CE is in the SBFD slot, and the MAC CE is used to indicate the beam used by the SBFD slot.

It should be noted that those skilled in the art can understand that the method provided in embodiments of the present disclosure can be executed alone or together with some methods in the embodiments of the present disclosure or some methods in the related arts.

As shown in FIG. 9, embodiments of the present disclosure provide a method for determining an active beam, the method is performed by an access network device and includes:
in step 91, second information is sent to a terminal through RRC signaling; and
the second information is used to determine an active beam used by a Physical Downlink Control Channel (PDCCH) transmitted in a Downlink (DL) time unit and/or in a Subband Full Duplex (SBFD) time unit, and the second information includes beam information of a candidate beam.

In an embodiment, the second information is sent to the terminal through the RRC signaling, and the second information includes beam information of a candidate beam. First information is sent to the terminal through MAC CE signaling, and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit, and the active beam used to transmit the PDCCH in the DL time unit and the active beam used to transmit the PDCCH in the SBFD time unit are different.

In an embodiment, the second information is sent to the terminal through the RRC signaling, and the second information includes beam information of a candidate beam. First information is sent to the terminal through MAC CE signaling, and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit, and the active beam used to transmit the PDCCH in the DL time unit and the active beam used to transmit the PDCCH in the SBFD time unit are different. The beam information includes first beam information configured for the DL time unit and/or second beam information configured for the SBFD time unit.

For example, there are two sets of beam information, which are the first beam information configured for the DL time unit and the second beam information configured for the SBFD time unit, respectively.

In an embodiment, the second information is sent to the terminal through the RRC signaling, and the second information includes beam information of a candidate beam. First information is sent to the terminal through MAC CE signaling, and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit, and the active beam used to transmit the PDCCH in the DL time unit and the active beam used to transmit the PDCCH in the SBFD time unit are different. The beam information includes first beam information and second beam information, and the RRC signaling includes a first information field and a second information field. The first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit.

In an embodiment, the second information is sent to the terminal through the RRC signaling, and the second information includes beam information of a candidate beam. First information is sent to the terminal through MAC CE signaling, and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit, and the active beam used to transmit the PDCCH in the DL time unit and the active beam used to transmit the PDCCH in the SBFD time unit are different. The beam information includes first beam information and second beam information, and the RRC signaling includes a first information field and a second information field. The first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit. A first TCI-State identity carried by the first information field is the same as a second TCI-State identity carried by the second information field.

In an embodiment, the second information is sent to the terminal through the RRC signaling, and the second information includes beam information of a candidate beam. First information is sent to the terminal through MAC CE signaling, and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit, and the active beam used to transmit the PDCCH in the DL time unit and the active beam used to transmit the PDCCH in the SBFD time unit are different. The beam information includes first beam information and second beam information, and the RRC signaling includes a first information field and a second information field. The first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit. A first TCI-State identity carried by the first information field is the same as a second TCI-State identity carried by the second information field, and a Synchronization Signal Block index (SSB-index) corresponding to the first TCI-State identity is different from a SSB-index corresponding to the second TCI-State identity.

In an embodiment, the second information is sent to the terminal through the RRC signaling, and the second information includes beam information of a candidate beam. First information is sent to the terminal through MAC CE signaling, and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit, and the active beam used to transmit the PDCCH in the DL time unit and the active beam used to transmit the PDCCH in the SBFD time unit are different. The beam information includes first beam information and second beam information, and the RRC signaling includes a first information field and a second information field. The first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit. A first TCI-State identity carried by the first information field is the same as a second TCI-State identity carried by the second information field, and a Non Zero Power Channel State Information Reference Signal Resource Identification (NZP-CSI-RS-resourceId) corresponding to the first TCI-State identity is different from a NZP-CSI-RS-resourceId corresponding to the second TCI-State identity.

For example, the first information field may be a newly added TCI-State-SBFD information element, which is used to indicate the Transmission Configuration Indicator-State (TCI-State) corresponding to the SBFD time unit. The second information field may be a TCI-State information element, and the first TCI-State identity (TCI-StateId) carried by the TCI- State-SBFD information element and the second TCI-State identity (TCI-StateId) carried by the TCI-State information element are the same. The Synchronization Signal Block index (SSB-index) corresponding to the first TCI-State identity and the SSB-index corresponding to the second TCI-State identity are different. The Non Zero Power Channel State Information Reference Signal Resource Identification (NZP-CSI-RS-resourceId) corresponding to the first TCI-State identity is different from the NZP-CSI-RS-resourceId corresponding to the second TCI-State identity.

In an embodiment, the second information is sent to the terminal through the RRC signaling, and the second information includes beam information of a candidate beam. First information is sent to the terminal through MAC CE signaling, and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit, and the active beam used to transmit the PDCCH in the DL time unit and the active beam used to transmit the PDCCH in the SBFD time unit are different. The beam information includes first beam information configured for the DL time unit and/or second beam information configured for the SBFD time unit. The RRC signaling includes a third information field, and the third information field is configured to indicate Transmission Configuration Indicator-States (TCI-States) corresponding to the DL time unit and the SBFD time unit. The number of candidate beams that can be configured by the third information field is greater than a number threshold.

For example, the maximum number of candidate beams that can be configured by default is maxNrofTCI-StatesPDCCH, and the maximum number of candidate beams that can be configured in the third information field can be increased to be greater than the default number threshold.

In an embodiment, the second information is sent to the terminal through the RRC signaling, and the second information includes beam information of a candidate beam. First information is sent to the terminal through MAC CE signaling, and the first information is configured to indicate the active beam. The first information and the second information are used by the terminal to determine the active beam used by the Physical Downlink Control Channel (PDCCH) transmitted in the Downlink (DL) time unit and/or in the Subband Full Duplex (SBFD) time unit, and the active beam used to transmit the PDCCH in the DL time unit and the active beam used to transmit the PDCCH in the SBFD time unit are different. The beam information includes first beam information configured for the DL time unit and/or second beam information configured for the SBFD time unit. The RRC signaling includes a third information field, and the third information field is configured to indicate Transmission Configuration Indicator-States (TCI-States) corresponding to the DL time unit and the SBFD time unit. The number of candidate beams that can be configured by the third information field is greater than the number of candidate beams that can be configured by the first information field; and/or the number of candidate beams that can be configured by the third information field is greater than the number of candidate beams that can be configured by the second information field.

It should be noted that those skilled in the art can understand that the method provided in embodiments of the present disclosure can be executed alone or together with some methods in the embodiments of the present disclosure or some methods in the related arts.

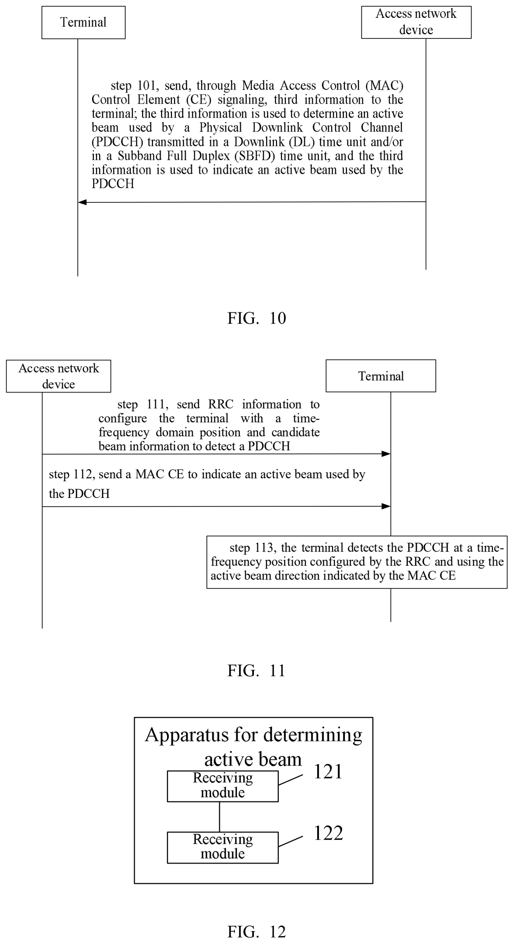

As shown in FIG. 10, embodiments of the present disclosure provide a method for determining an active beam, the method is performed by an access network device and includes:
in step 101, third information is sent to a terminal through Media Access Control (MAC) Control Element (CE) signaling; and
the third information is used to determine an active beam used by a Physical Downlink Control Channel (PDCCH) transmitted in a Downlink (DL) time unit and/or in a Subband Full Duplex (SBFD) time unit, and the third information is used to indicate an active beam used by the PDCCH.

In an embodiment, the second information is sent to the terminal through the RRC signaling, and the second information includes beam information of a candidate beam. First information is sent to the terminal through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is single, and the first information indicates the active beam used by the DL time unit and the active beam used by the SBFD time unit. That is, the first information indicates the active beam corresponding to the DL time unit and the active beam corresponding to the SBFD time unit. It should be noted that the number of the MAC CE signaling is single, that is, one MAC CE signaling can indicate both the beam used by the DL time unit and the beam used by the SBFD time unit.

In an embodiment, the second information is sent to the terminal through the RRC signaling, and the second information includes beam information of a candidate beam. First information is sent to the terminal through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is single, and the first information indicates the active beam used by the DL time unit and the active beam used by the SBFD time unit. The MAC CE signaling includes a fourth information field, a fifth information field and a sixth information field, the fourth information field indicates a beam used by the SBFD time unit, the fifth information field indicates a beam used by the DL time unit, and the sixth information field indicates control resource set identities (CORESET IDs) associated with PDCCHs corresponding to the DL time unit and the SBFD time unit. The control resource set identity used by the PDCCH corresponding to the DL time unit is the same as the control resource set identity used by the PDCCH corresponding to the SBFD time unit.

In an embodiment, the second information is sent to the terminal through the RRC signaling, and the second information includes beam information of a candidate beam. First information is sent to the terminal through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is single, and the first information indicates the active beam used by the DL time unit and the active beam used by the SBFD time unit. The fourth information field indicates a first beam identity in a first information field or a third information field of RRC signaling carrying the second information, and the fifth information field indicates a second beam identity in a second information field or the third information field of the RRC signaling carrying the second information. The DL time unit uses a beam corresponding to the second beam identity.

In an embodiment, the second information is sent to the terminal through the RRC signaling, and the second information includes beam information of a candidate beam. First information is sent to the terminal through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is single, and the first information indicates the active beam used by the DL time unit and the active beam used by the SBFD time unit. The MAC CE signaling includes a seventh information field, an eighth information field, a ninth information field and a tenth information field, the seventh information field indicates a control resource set identity associated with a PDCCH corresponding to the SBFD time unit, the eighth information field indicates a beam used by the SBFD time unit, the ninth information field indicates a control resource set identity associated with a PDCCH corresponding to the DL time unit, the tenth information field indicates a beam used by the DL time unit, and the PDCCH corresponding to the DL time unit and the PDCCH corresponding to the SBFD time unit use different control resource set identities.

In an embodiment, the second information is sent to the terminal through the RRC signaling, and the second information includes beam information of a candidate beam. First information is sent to the terminal through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is single, and the first information indicates the active beam used by the DL time unit and the active beam used by the SBFD time unit. The MAC CE signaling includes a seventh information field, an eighth information field, a ninth information field and a tenth information field, the seventh information field indicates a control resource set identity associated with a PDCCH corresponding to the SBFD time unit, the eighth information field indicates a beam used by the SBFD time unit, the ninth information field indicates a control resource set identity associated with a PDCCH corresponding to the DL time unit, the tenth information field indicates a beam used by the DL time unit, and the PDCCH corresponding to the DL time unit and the PDCCH corresponding to the SBFD time unit use different control resource set identities. The seventh information field indicates a first beam identity in a first information field or a third information field of RRC signaling carrying the second information, and the SBFD time unit uses a beam corresponding to the first beam identity. The tenth information field indicates a second beam identity in a second information field or the third information field of the RRC signaling carrying the second information, and the DL time unit uses a beam corresponding to the second beam identity.

In an embodiment, the second information is sent to the terminal through the RRC signaling, and the second information includes beam information of a candidate beam. First information is sent to the terminal through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is single, and the first information indicates the active beam used by the DL time unit and the active beam used by the SBFD time unit. The first information indicates a second beam identity in a second information field or a third information field of the RRC signaling carrying the second information.

In an embodiment, a reference signal corresponding to the second beam identity is a first reference signal or a second reference signal.

In an embodiment, the second information is sent to the terminal through the RRC signaling, and the second information includes beam information of a candidate beam. First information is sent to the terminal through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is single, and the first information indicates the active beam used by the DL time unit and the active beam used by the SBFD time unit. The first information indicates a second beam identity in a second information field or a third information field of the RRC signaling carrying the second information. A beam corresponding to the second beam identity indicated by the first information carried by the MAC CE signaling is an active beam of the PDCCH in the DL time unit; or an active beam of the PDCCH in the SBFD time unit is a beam corresponding to a first beam identity, and the first beam identity is determined based on the second beam identity and a first offset value.

In an embodiment, the second information is sent to the terminal through the RRC signaling, and the second information includes beam information of a candidate beam. First information is sent to the terminal through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is single, and the first information indicates the active beam used by the DL time unit and the active beam used by the SBFD time unit. The first information indicates a second beam identity in a second information field or a third information field of the RRC signaling carrying the second information. A beam corresponding to the second beam identity indicated by the first information carried by the MAC CE signaling is an active beam of the PDCCH in the DL time unit; or an active beam of the PDCCH in the SBFD time unit is a beam corresponding to a first beam identity, and the first beam identity is determined based on the second beam identity and a first offset value. A reference signal corresponding to the second beam identity is the first reference signal, and the first offset value is a first given value; and a reference signal corresponding to the second beam identity is the second reference signal, and the first offset value is a second given value.

In an embodiment, the first reference signal is a Channel State Information Reference Signal (CSI-RS), and the second reference signal is a Synchronization Signal Block (SSB).

In an embodiment, the second information is sent to the terminal through the RRC signaling, and the second information includes beam information of a candidate beam. First information is sent to the terminal through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is two, and the MAC CE signaling includes first MAC CE signaling and second MAC CE signaling. An active beam indicated by the first information carried by the first MAC CE signaling is a beam used by the DL time unit, and an active beam indicated by the first information carried by the second MAC CE signaling is a beam used by the SBFD time unit.

In an embodiment, the second information is sent to the terminal through the RRC signaling, and the second information includes beam information of a candidate beam. First information is sent to the terminal through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is two, and the MAC CE signaling includes first MAC CE signaling and second MAC CE signaling. An active beam indicated by the first information carried by the first MAC CE signaling is a beam used by the DL time unit, and an active beam indicated by the first information carried by the second MAC CE signaling is a beam used by the SBFD time unit. The second MAC CE signaling includes an eleventh information field; and the eleventh information field indicates a first value, the MAC CE signaling is the first MAC CE signaling, and an active beam indicated by the first information carried by the first MAC CE signaling is the beam used by the DL time unit; or, the eleventh information field indicates a second value, the MAC CE signaling is the second MAC CE signaling, and an active beam indicated by the first information carried by the second MAC CE signaling is the beam used by the SBFD time unit.

In an embodiment, the second information is sent to the terminal through the RRC signaling, and the second information includes beam information of a candidate beam. First information is sent to the terminal through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is two, and the MAC CE signaling includes first MAC CE signaling and second MAC CE signaling. An active beam indicated by the first information carried by the first MAC CE signaling is a beam used by the DL time unit, and an active beam indicated by the first information carried by the second MAC CE signaling is a beam used by the SBFD time unit. The MAC CE signaling is in the DL time unit, the MAC CE signaling is the first MAC CE signaling, and an active beam indicated by the first information carried by the first MAC CE signaling is the beam used by the DL time unit; or, the MAC CE signaling is in the SBFD time unit, the MAC CE signaling is the second MAC CE signaling, and the active beam indicated by the first information carried by the second MAC CE signaling is the beam used by the SBFD time unit.

In an embodiment, the second information is sent to the terminal through the RRC signaling, and the second information includes beam information of a candidate beam. First information is sent to the terminal through MAC CE signaling, and the first information is configured to indicate the active beam. The active beam used by the Physical Downlink Control Channel (PDCCH) transmitted in the Downlink (DL) time unit and/or in the Subband Full Duplex (SBFD) time unit is determined based on the first information and the second information, and the active beam used to transmit the PDCCH in the DL time unit and the active beam used to transmit the PDCCH in the SBFD time unit are different. The number of the MAC CE signaling is two, and the MAC CE signaling includes first MAC CE signaling and second MAC CE signaling. An active beam indicated by the first information carried by the first MAC CE signaling is a beam used by the DL time unit, and an active beam indicated by the first information carried by the second MAC CE signaling is a beam used by the SBFD time unit. The first information carried by the first MAC CE signaling indicates a second beam identity in a second information field or a third information field, and the DL time unit uses a beam corresponding to the second beam identity. The first information carried by the second MAC CE signaling indicates a first beam identity in a first information field or the third information field, and the SBFD time unit uses a beam corresponding to the first beam identity.

It should be noted that those skilled in the art can understand that the method provided in embodiments of the present disclosure can be executed alone or together with some methods in the embodiments of the present disclosure or some methods in the related arts.

In order to better understand embodiments of the present disclosure, the technical solution of the present disclosure is further described below through an example embodiment.

### Example 1

Referring to FIG. 11, embodiments of the present disclosure provide a method for determining an active beam, and the method includes steps 111 to 113.

In the step 111, RRC information is sent to configure the terminal with a time-frequency domain position and candidate beam information to detect a PDCCH.

In an embodiment, the terminal receives the RRC information, and the RRC information configures the UE with the time-frequency position and the candidate beam information to detect the PDCCH.

In an embodiment (corresponding to scheme 1-1), two sets of candidate beam information are configured in the RRC information, that is, candidate beam information of the DL slot and the SBFD slot are configured respectively.

In an embodiment, in scheme 1-1, an information element TCI-State-SBFD is newly added to configure TCI-State information in the SBFD slot. TCI-StateId in TCI-State-SBFD can be the same as TCI-StateId in the information element TCI-State, and the SSB-index or NZP-CSI-RS-resourceId corresponding to the same TCI-StateId in TCI-State-SBFD and TCI-State may be different.

In an embodiment (corresponding to scheme 1-2), only one set of candidate beam information is configured in the RRC information.

In an embodiment, in scheme 1-2, in one set of configurations, the maximum number of candidate beams increases, that is, maxNrofTCI-StatesPDCCH increases.

In the step 112, a MAC CE is sent to indicate the active beam used by the PDCCH.

In an embodiment, the terminal receives the MAC CE indicating the active beam used by the PDCCH.

In an embodiment (corresponding to scheme 2-1), one MAC CE indicates both the beam used by the DL and the beam used by the SBFD.

In an embodiment, in scheme 2-1, a newly added field in the MAC CE indicates the beam used by the SBFD, and the MAC CE indicates two active beams.

In scheme 2-1, for example, a newly added 7-bit TCI-state-Id field in the MAC CE is used to indicate the beam used by the SBFD. In this case, the PDCCHs of the DL and SBFD slots use the same CORESET ID.

In scheme 2-1, for example, a newly added 4 bits in the MAC CE indicate the CORESET ID associated with the PDCCH in the SBFD slot, and the newly added 7-bit TCI-state-Id field is used to indicate the beam used by the SBFD. In this case, the PDCCHs of the DL and SBFD slots can use different CORESET IDs.

In an embodiment (corresponding to scheme 2-2), two MAC CEs respectively indicate the beam used by the DL and the beam used by the SBFD, and the MAC CE indicates the beam corresponding to TCI-State Id#1.

In an embodiment, in scheme 2-2, a newly added 1 bit in the MAC CE indicates that the MAC CE is used for the DL slot or the SBFD slot.

In scheme 2-2, for example, the newly added 1 bit is 1, and the MAC CE is used for the DL slot; and the newly added 1bit is 0, and the MAC CE is used for the SBFD slot.

In an embodiment, in scheme 2-2, the understanding of the MAC CE is updated:

the MAC CE is in the DL slot, and the MAC CE is used to indicate the beam used by the DL slot; and

the MAC CE is in the SBFD slot, and the MAC CE is used to indicate the beam used by the SBFD slot.

In an embodiment (corresponding to scheme 2-3), the MAC CE indicates the use of the beam corresponding to TCI-State Id#1.

In an embodiment, the reference signal corresponding to TCI-State Id#1 is a CSI-RS.

In an embodiment, the MAC CE is in a DL slot, and the MAC CE is used to indicate that the DL slot uses the beam corresponding to TCI-State Id#1.

In an embodiment, the MAC CE is in the SBFD slot, and the MAC CE is used to indicate that the SBFD slot uses the beam corresponding to TCI-State Id#1+K1.

In an embodiment, K1 is configured through the RRC or is a default value.

In an embodiment, the reference signal corresponding to TCI-State Id#1 is the SSB.

In an embodiment, the MAC CE is in a DL slot, and the MAC CE is used to indicate that the DL slot uses the beam corresponding to TCI-State Id#1.

In an embodiment, the MAC CE is in the SBFD slot, and the MAC CE is used to indicate that the SBFD slot uses the beam corresponding to TCI-State Id#1+K2.

In an embodiment, K2 is not equal to K1, and K2 is configured through the RRC.

In an embodiment, K2 is equal to 0.

In an embodiment, K2 is equal to K1.

In an embodiment, one of "K2 is equal to 0" and "K2=K1" is used as a default mode, and the default mode is used when K2 is not configured.

In the step 113, the terminal detects the PDCCH at a time-frequency position configured by the RRC and using the active beam direction indicated by the MAC CE.

In an embodiment, the active beams used by the PDCCHs in the DL and SBFD slots are determined based on the information in steps 111 and 112.

In an embodiment, when scheme 1-1 is used in the step 111, scheme 2-1 or scheme 2-2 is used in the step 112.

In an embodiment, when scheme 1-2 is used in the step 111, scheme 2-3 is used in step 112.

As shown in FIG. 12, embodiments of the present disclosure provide an apparatus for determining an active beam, and the apparatus includes:
a receiving module 121, configured to receive first information sent from an access network device, and the first information is configured to indicate an active beam; and
a determination module 122, configured to determine, based on the first information and second information, an active beam used by a Physical Downlink Control Channel (PDCCH) transmitted in a Downlink (DL) time unit and/or in a Subband Full Duplex (SBFD) time unit, wherein the second information includes beam information of a candidate beam, and an active beam used to transmit the PDCCH in the DL time unit and an active beam used to transmit the PDCCH in the SBFD time unit are different.

It should be noted that those skilled in the art can understand that the method provided in embodiments of the present disclosure can be executed alone or together with some methods in the embodiments of the present disclosure or some methods in the related arts.

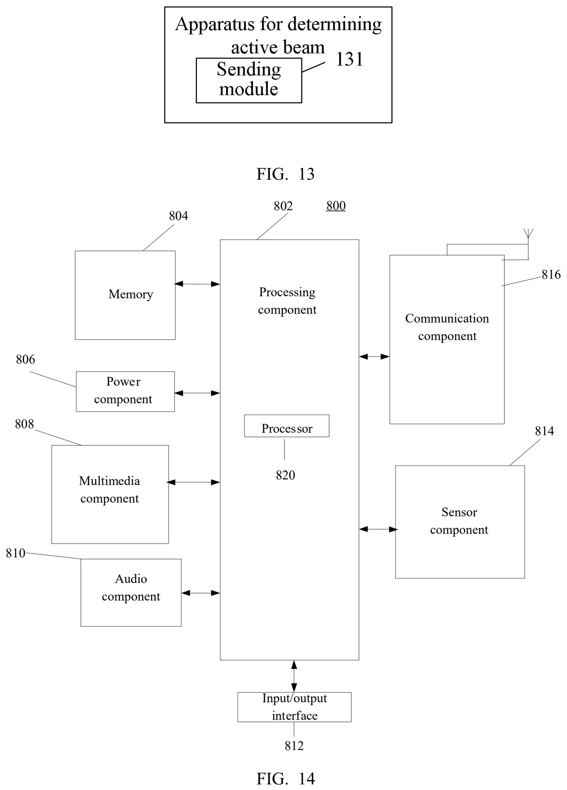

As shown in FIG. 13, embodiments of the present disclosure provide an apparatus for determining an active beam, and the apparatus includes:
a sending module 131, configured to send first information to the terminal; and
the first information indicates to the terminal an active beam used by a Physical Downlink Control Channel (PDCCH) transmitted in a Downlink (DL) time unit and/or in a Subband Full Duplex (SBFD) time unit, and an active beam used to transmit the PDCCH in the DL time unit and an active beam used to transmit the PDCCH in the SBFD time unit are different.

It should be noted that those skilled in the art can understand that the method provided in embodiments of the present disclosure can be executed alone or together with some methods in the embodiments of the present disclosure or some methods in the related arts.

An embodiment of the present disclosure provides a communication device, and the communication device includes:
a processor; and
a memory configured to store executable instructions of the processor;
the processor is configured to implement the method in any embodiment of the present disclosure when running the executable instructions.

The processor may include various types of storage media, which are non-temporary computer storage media that can continue to memorize information stored thereon after the communication device loses power.

The processor may be connected to the memory via a bus or the like to read the executable program stored in the memory.

An embodiment of the present disclosure further provides a computer storage medium having a computer executable program stored thereon, which, when executed by a processor, implements the method in any embodiment of the present disclosure.

Regarding the apparatus in the above embodiments, the specific manner in which each module performs operations has been described in detail in the embodiments of the method, and will not be elaborated here.

As shown in FIG. 14, an embodiment of the present disclosure provides a structure of a terminal.

Reference is made to a terminal 800 shown in FIG. 14. An embodiment of the present disclosure provides the terminal 800, which may be specifically a mobile phone, a computer, a digital broadcast terminal, a messaging device, a gaming console, a tablet device, a medical device, an exercise device, a personal digital assistant, etc.

Referring to FIG. 14, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to execute instructions to complete all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, video, etc. The memory 804 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. The front camera and the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide state assessments of various aspects of the terminal 800. For instance, the sensor component 814 may detect an open/closed state of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 may access a wireless network based on a communication standard, such as Wi-Fi, 2G or 3G, or a combination thereof. In an embodiment, the communication component 816 receives a broadcast signal or broadcast associated information from an external broadcast management system via a broadcast channel. In an embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment of the present disclosure, the terminal 800 may be implemented with one or more application specific integrated circuits (ASICs), digital signal processors (DSPs), digital signal processing devices (DSPDs), programmable logic devices (PLDs), field programmable gate arrays (FPGAs), controller, micro-controller, microprocessors, or other electronic components, for performing the above described methods.

In an embodiment of the present disclosure, there is further provided a non-transitory computer readable storage medium including instructions, such as the memory 804 including instructions, the above instructions may be executed by the processor 820 in the terminal 800 for completing the above-described methods. For example, the non-transitory computer-readable storage medium may be a ROM, a Random Access Memory (RAM), a CD-ROM, a magnetic tape, a floppy disc, an optical data storage device, and the like.

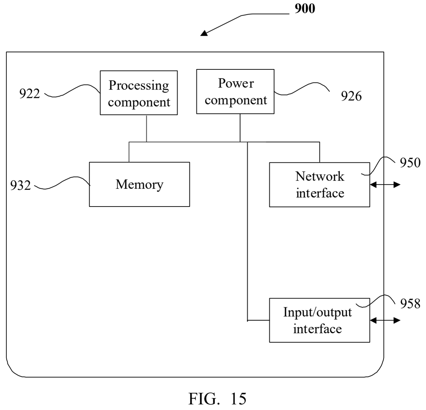

As shown in FIG. 15, embodiments of the present disclosure provide a structure of a base station. For example, a base station 900 may be provided as a network side device. Referring to FIG. 15, the base station 900 includes a processing component 922, which further includes one or more processors and a memory resource represented by a memory 932 for storing instructions executable by the processing component 922, such as an application program. The application program stored in the memory 932 may include one or more modules, each corresponding to a set of instructions. In addition, the processing component 922 is configured to execute the instructions to execute the aforementioned any method applied on the base station.

The base station 900 may further include: a power component 926 configured to perform power management of the base station 900, a wired or wireless network interface 950 configured to connect the base station 900 to the network, and an input/output (I/O) interface 958. The base station 900 may operate an operating system stored in the memory 932, such as Windows Server TM, Mac OS XTM, UnixTM, LinuxTM, FreeBSDTM, or the like.

Other implementations of the present disclosure will be apparent to those skilled in the art from consideration of the specification and practice of the present disclosure disclosed here. The present disclosure is intended to cover any variations, uses, or adaptations of the present disclosure following the general principles thereof and including the common general knowledge or habitual technical means in the technical field not disclosed in the present disclosure. The specification and embodiments are considered as exemplary only, and a true scope and spirit of the present disclosure is indicated by the appending claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for determining an active beam, performed by a terminal, comprising:
receiving first information sent from an access network device, wherein the first information is configured to indicate an active beam; and
determining, based on the first information and second information, an active beam used by a Physical Downlink Control Channel (PDCCH) transmitted in a Downlink (DL) time unit and/or in a Subband Full Duplex (SBFD) time unit, wherein the second information comprises beam information of a candidate beam, and an active beam used to transmit the PDCCH in the DL time unit and an active beam used to transmit the PDCCH in the SBFD time unit are different.

2. The method according to claim 1, further comprising:
determining the second information based on a predetermined protocol rule; or,
receiving the second information sent from the access network device.

3. The method according to claim 2, wherein receiving the second information sent from the access network device comprises:
receiving, through first-type signaling, the second information sent from the access network device.

4. The method according to claim 3, wherein the beam information comprises: first beam information configured for the DL time unit and/or second beam information configured for the SBFD time unit.

5. The method according to claim 4, wherein the beam information comprises the first beam information and the second beam information, the first-type signaling comprises a first information field and a second information field, the first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit.

6. The method according to claim 5, wherein a first TCI-State identity carried by the first information field is the same as a second TCI-State identity carried by the second information field.

7. The method according to claim 6, wherein a Synchronization Signal Block index (SSB-index) corresponding to the first TCI-State identity is different from a SSB-index corresponding to the second TCI-State identity; and/or a Non Zero Power Channel State Information Reference Signal Resource Identification (NZP-CSI-RS-resourceId) corresponding to the first TCI-State identity is different from a NZP-CSI-RS-resourceId corresponding to the second TCI-State identity.

8. The method according to claim 4, wherein the beam information comprises the first beam information and/or the second beam information, the first-type signaling comprises a third information field, and the third information field is configured to indicate Transmission Configuration Indicator-States (TCI-States) corresponding to the DL time unit and the SBFD time unit;
wherein the number of candidate beams available for being configured by the third information field is greater than the number of candidate beams available for being configured by the first information field; and/or,
the number of candidate beams available for being configured by the third information field is greater than the number of candidate beams available for being configured by the second information field.

9. The method according to claim 1, wherein receiving the first information sent from the access network device comprises:
receiving, through second-type signaling, the first information sent from the access network device.

10. The method according to claim 9, wherein the number of the second-type signaling is single, and the first information indicates an active beam used by the DL time unit and an active beam used by the SBFD time unit.

11. The method according to claim 10, wherein the second-type signaling comprises a fourth information field, a fifth information field and a sixth information field, the fourth information field indicates a beam used by the SBFD time unit, the fifth information field indicates a beam used by the DL time unit, and the sixth information field indicates control resource set identities associated with PDCCHs corresponding to the DL time unit and the SBFD time unit; and
the control resource set identity used by the PDCCH corresponding to the DL time unit is the same as the control resource set identity used by the PDCCH corresponding to the SBFD time unit.

12. The method according to claim 11, wherein the fourth information field indicates a first beam identity in a first information field or a third information field of first-type signaling carrying the second information, and a beam corresponding to the first beam identity is used by the SBFD time unit; and
the fifth information field indicates a second beam identity in a second information field or the third information field of the first-type signaling carrying the second information, and a beam corresponding to the second beam identity is used by the DL time unit.

13. The method according to claim 10, wherein the second-type signaling comprises a seventh information field, an eighth information field, a ninth information field and a tenth information field, the seventh information field indicates a control resource set identity associated with a PDCCH corresponding to the SBFD time unit, the eighth information field indicates a beam used by the SBFD time unit, the ninth information field indicates a control resource set identity associated with a PDCCH corresponding to the DL time unit, the tenth information field indicates a beam used by the DL time unit, and different control resource set identities are used by the PDCCH corresponding to the DL time unit and the PDCCH corresponding to the SBFD time unit.

14. The method according to claim 13, wherein the seventh information field indicates a first beam identity in a first information field or a third information field of first-type signaling carrying the second information, and a beam corresponding to the first beam identity is used by the SBFD time unit; and
the tenth information field indicates a second beam identity in a second information field or the third information field of the first-type signaling carrying the second information, and a beam corresponding to the second beam identity is used by the DL time unit.

15. The method according to claim 10, wherein the first information indicates a second beam identity in a second information field or a third information field of first-type signaling carrying the second information.

16. The method according to claim 15, wherein a reference signal corresponding to the second beam identity is a first reference signal or a second reference signal.

17. The method according to claim 16, wherein a beam corresponding to the second beam identity indicated by the first information carried by the second-type signaling is an active beam of the PDCCH in the DL slot; or
an active beam of the PDCCH in the SBFD time unit is a beam corresponding to a first beam identity, and the first beam identity is determined based on the second beam identity and a first offset value.

18. The method according to claim 17, wherein the reference signal corresponding to the second beam identity is the first reference signal, and the first offset value is a first given value;
the reference signal corresponding to the second beam identity is the second reference signal, and the first offset value is a second given value.

19. The method according to any one of claims 16 to 18, wherein the first reference signal is a Channel State Information Reference Signal (CSI-RS), and the second reference signal is a Synchronization Signal Block (SSB).

20. The method according to claim 9, wherein the number of the second-type signaling is two, and the second-type signaling comprises first signaling and second signaling; and
an active beam indicated by the first information carried by the first signaling is a beam used by the DL time unit, and an active beam indicated by the first information carried by the second signaling is a beam used by the SBFD time unit.

21. The method according to claim 20, wherein the second signaling comprises an eleventh information field; and
the eleventh information field indicates a first value, the second-type signaling is the first signaling, and the active beam indicated by the first information carried by the first signaling is the beam used by the DL time unit; or,
the eleventh information field indicates a second value, the second-type signaling is the second signaling, and the active beam indicated by the first information carried by the second signaling is the beam used by the SBFD time unit.

22. The method according to claim 20, wherein the second-type signaling is in the DL time unit, the second-type signaling is the first signaling, and the active beam indicated by the first information carried by the first signaling is the beam used by the DL time unit; or,
the second-type signaling is in the SBFD time unit, the second-type signaling is the second signaling, and the active beam indicated by the first information carried by the second signaling is the beam used by the SBFD time unit.

23. The method according to any one of claims 20 to 22, wherein:
the first information carried by the first signaling indicates a second beam identity in a second information field or a third information field, and a beam corresponding to the second beam identity is used by the DL time unit; and
the first information carried by the second signaling indicates a first beam identity in a first information field or the third information field, and a beam corresponding to the first beam identity is used by the SBFD time unit.

24. A method for determining an active beam, performed by an access network device, comprising:
sending first information to a terminal;
wherein the first information indicates to the terminal an active beam used by a Physical Downlink Control Channel (PDCCH) transmitted in a Downlink (DL) time unit and/or in a Subband Full Duplex (SBFD) time unit, and an active beam used to transmit the PDCCH in the DL time unit and an active beam used to transmit the PDCCH in the SBFD time unit are different.

25. The method according to claim 24, further comprising:
sending second information to the terminal;
wherein the second information comprises beam information of a candidate beam, and the first information and the second information are used by the terminal to determine the active beam used by the PDCCH transmitted in the DL time unit and/or in the SBFD time unit.

26. The method according to claim 25, wherein sending the second information to the terminal comprises:
sending, through first-type signaling, the second information to the terminal.

27. The method according to claim 26, wherein the beam information comprises first beam information configured for the DL time unit and/or second beam information configured for the SBFD time unit.

28. The method according to claim 27, wherein the beam information comprises the first beam information and the second beam information, the first-type signaling comprises a first information field and a second information field, the first information field is configured to indicate a Transmission Configuration Indicator-State (TCI-State) corresponding to the SBFD time unit, and the second information field is configured to indicate a Transmission Configuration Indicator-State (TCI-State) corresponding to the DL time unit.

29. The method according to claim 28, wherein a first TCI-State identity carried by the first information field is the same as a second TCI-State identity carried by the second information field.

30. The method according to claim 29, wherein a Synchronization Signal Block index (SSB-index) corresponding to the first TCI-State identity is different from a SSB-index corresponding to the second TCI-State identity; and/or a Non Zero Power Channel State Information Reference Signal Resource Identification (NZP-CSI-RS-resourceId) corresponding to the first TCI-State identity is different from a NZP-CSI-RS-resourceId corresponding to the second TCI-State identity.

31. The method according to claim 27, wherein the beam information comprises the first beam information and/or the second beam information, the first-type signaling comprises a third information field, and the third information field is configured to indicate Transmission Configuration Indicator-States (TCI-States) corresponding to the DL time unit and the SBFD time unit;
the number of candidate beams available for being configured by the third information field is greater than the number of candidate beams available for being configured by the first information field; and/or,
the number of candidate beams available for being configured by the third information field is greater than the number of candidate beams available for being configured by the second information field.

32. The method according to claim 24, wherein sending the first information to the terminal comprises:
sending, through second-type signaling, the first information to the terminal.

33. The method according to claim 32, wherein the number of the second signaling is single, and the first information indicates an active beam used by the DL time unit and an active beam used by the SBFD time unit.

34. The method according to claim 33, wherein the second signaling comprises a fourth information field, a fifth information field and a sixth information field, the fourth information field indicates a beam used by the SBFD time unit, the fifth information field indicates a beam used by the DL time unit, and the sixth information field indicates control resource set identities associated with PDCCHs corresponding to the DL time unit and the SBFD time unit; and
the control resource set identity used by the PDCCH corresponding to the DL time unit is the same as the control resource set identity used by the PDCCH corresponding to the SBFD time unit.

35. The method according to claim 34, wherein the fourth information field indicates a first beam identity in a first information field or a third information field of first-type signaling carrying the second information, and a beam corresponding to the first beam identity is used by the SBFD time unit; and
the fifth information field indicates a second beam identity in a second information field or the third information field of the first-type signaling carrying the second information, and a beam corresponding to the second beam identity is used by the DL time unit.

36. The method according to claim 33, wherein the second-type signaling comprises a seventh information field, an eighth information field, a ninth information field and a tenth information field, the seventh information field indicates a control resource set identity associated with a PDCCH corresponding to the SBFD time unit, the eighth information field indicates a beam used by the SBFD time unit, the ninth information field indicates a control resource set identity associated with a PDCCH corresponding to the DL time unit, the tenth information field indicates a beam used by the DL time unit, and different control resource set identities are used by the PDCCH corresponding to the DL time unit and the PDCCH corresponding to the SBFD time unit.

37. The method according to claim 36, wherein the seventh information field indicates a first beam identity in a first information field or a third information field of first-type signaling carrying the second information, and a beam corresponding to the first beam identity is used by the SBFD time unit; and
the tenth information field indicates a second beam identity in a second information field or the third information field of the first-type signaling carrying the second information, and a beam corresponding to the second beam identity is used by the DL time unit.

38. The method according to claim 33, wherein the first information indicates a second beam identity in a second information field or a third information field of first-type signaling carrying the second information.

39. The method according to claim 38, wherein a reference signal corresponding to the second beam identity is a first reference signal or a second reference signal.

40. The method according to claim 39, wherein a beam corresponding to the second beam identity indicated by the first information carried by the second-type signaling is an active beam of the PDCCH in the DL slot; or
an active beam of the PDCCH in the SBFD time unit is a beam corresponding to a first beam identity, and the first beam identity is determined based on the second beam identity and a first offset value.

41. The method according to claim 40, wherein the reference signal corresponding to the second beam identity is the first reference signal, and the first offset value is a first given value;
the reference signal corresponding to the second beam identity is the second reference signal, and the first offset value is a second given value.

42. The method according to any one of claims 39 to 41, wherein the first reference signal is a Channel State Information Reference Signal (CSI-RS), and the second reference signal is a Synchronization Signal Block (SSB).

43. The method according to claim 32, wherein the number of the second-type signaling is two, and the second-type signaling comprises first signaling and second signaling; and
an active beam indicated by the first information carried by the first signaling is a beam used by the DL time unit, and an active beam indicated by the first information carried by the second signaling is a beam used by the SBFD time unit.

44. The method according to claim 43, wherein the second signaling comprises an eleventh information field; and
the eleventh information field indicates a first value, the second-type signaling is the first signaling, and the active beam indicated by the first information carried by the first signaling is the beam used by the DL time unit; or,
the eleventh information field indicates a second value, the second-type signaling is the second signaling, and the active beam indicated by the first information carried by the second signaling is the beam used by the SBFD time unit.

45. The method according to claim 43, wherein the second-type signaling is in the DL time unit, the second-type signaling is the first signaling, and the active beam indicated by the first information carried by the first signaling is the beam used by the DL time unit; or,
the second-type signaling is in the SBFD time unit, the second-type signaling is the second signaling, and the active beam indicated by the first information carried by the second signaling is the beam used by the SBFD time unit.

46. The method according to any one of claims 43 to 45, wherein:
the first information carried by the first signaling indicates a second beam identity in a second information field or a third information field, and a beam corresponding to the second beam identity is used by the DL time unit; and
the first information carried by the second signaling indicates a first beam identity in a first information field or the third information field, and a beam corresponding to the first beam identity is used by the SBFD time unit.

47. An apparatus for determining an active beam, comprising:
a receiving module, configured to receive first information sent from an access network device, wherein the first information is configured to indicate an active beam; and
a determination module, configured to determine, based on the first information and second information, an active beam used by a Physical Downlink Control Channel (PDCCH) transmitted in a Downlink (DL) time unit and/or in a Subband Full Duplex (SBFD) time unit, wherein the second information comprises beam information of a candidate beam, and an active beam used to transmit the PDCCH in the DL time unit and an active beam used to transmit the PDCCH in the SBFD time unit are different.

48. An apparatus for determining an active beam, comprising:
a sending module, configured to send first information to a terminal; and
wherein the first information indicates to the terminal an active beam used by a Physical Downlink Control Channel (PDCCH) transmitted in a Downlink (DL) time unit and/or in a Subband Full Duplex (SBFD) time unit, and an active beam used to transmit the PDCCH in the DL time unit and an active beam used to transmit the PDCCH in the SBFD time unit are different.

49. A communication device, comprising:
one or more processors;
wherein the processors are configured to call instructions to cause the communication device to execute the method for determining the active beam according to any one of claims 1 to 22 and claims 23 to 44.

50. A storage medium having instructions stored thereon, wherein the instructions, when running on a communication device, cause the communication device to execute the method for determining the active beam according to any one of claims 1 to 22 and claims 23 to 44.
